(19) **Europäisches Patentamt / European Patent Office / Office européen des brevets**

(11) **EP 4 128 173 B1**

(12) # EUROPEAN PATENT SPECIFICATION

(45) Date of publication and mention
of the grant of the patent:
**27.05.2026 Bulletin 2026/22**

(21) Application number: **21779475.9**

(22) Date of filing: **25.03.2021**

(51) International Patent Classification (IPC):
**G07C 5/08** *(2006.01)*    **B60R 16/02** *(2006.01)*

(52) Cooperative Patent Classification (CPC):
**G07C 5/0808; B60R 16/0234**

(86) International application number:
**PCT/IN2021/050310**

(87) International publication number:
**WO 2021/199072 (07.10.2021 Gazette 2021/40)**

(54) **GUIDED DIAGNOSTICS OF VEHICLES USING PINOUT BOX SYSTEM**

GEFÜHRTE FAHRZEUGDIAGNOSE MIT PINOUT-BOX-SYSTEM

DIAGNOSTIC GUIDÉ DE VÉHICULES À L'AIDE D'UN SYSTÈME DE BOÎTIER DE BROCHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2020 IN 202041014444**

(43) Date of publication of application:
**08.02.2023 Bulletin 2023/06**

(73) Proprietor: **TVS Motor Company Limited
600006 Chennai (IN)**

(72) Inventors:
- **RAKSHIT, Sourav
  Nungambakkam 600 006 (IN)**
- **SAMPIGEHALLI NARAYANAPPA, Mokshith
  Nungambakkam Chennai, 600 006 (IN)**
- **GUPTA, Chetan Kumar
  Nungambakkam Chennai, 600 006 (IN)**
- **GANDHI, Milind Atul
  Nungambakkam Chennai, 600 006 (IN)**

(74) Representative: **Patentanwaltskanzlei
Matschnig & Forsthuber OG
Biberstraße 22
Postfach 36
1010 Wien (AT)**

(56) References cited:
**WO-A1-92/08141      TW-U- M 479 871
US-A- 4 690 475      US-B2- 8 560 168
US-B2- 8 560 168      US-B2- 8 838 328**

- **ANONYM: "CAN Test Box", 1 May 2013
  (2013-05-01), XP093138913, Retrieved from the
  Internet <URL:http://materiel-physique.ens-lyon.
  fr/Logiciels/CD%20N%C2%B0%201%20Logiciels
  %20ENS%20LYON%202018/Picolog/document/
  pdf/DO199_ctbqsg_de_2.pdf> [retrieved on
  20240307]**
- **PICO TECHNOLOGIES: "CAN Test Box", 1
  January 2017 (2017-01-01), XP093138921,
  Retrieved from the Internet <URL:https://www.
  picoauto.com/download/documents/manuals/
  DO148-can-test-box-manual.pdf> [retrieved on
  20240307]**

## Description

TECHNICAL FIELD

The present subject matter relates, in general, to guided diagnostics of vehicles and, in particular, to testing of electronic and electrical components of vehicles using a pinout box system.

BACKGROUND

A vehicle may include a plurality of electronic and electrical components, such as an electronic control unit (ECU) and various other components coupled to the ECU, such as sensors, transducers, and actuators. The components of the vehicles may have to be tested, for example, to determine whether there is a short circuit or open circuit, and to determine whether the components are outputting signals of rated magnitude. The testing of the components may be part of diagnostic operations on the vehicle.

BRIEF DESCRIPTION OF DRAWINGS

The features, aspects, and advantages of the present invention will be better understood with regard to the following description, and accompanying figures. The use of the same reference number in different figures indicates similar or identical features and components.

Fig. 1 illustrates a pinout box system, in accordance with an implementation of the present subject matter.
Fig. 2 illustrates a light emitter that is to emit light to facilitate identification a port for insertion of a test lead, in accordance with an implementation of the present subject matter.
Fig. 3 illustrates insertion of a test lead into a port, in accordance with an implementation of the present subject matter.
Fig. 4 illustrates a connection between a terminal of a first set of terminals and a terminal of second set of terminals.
Fig. 5 illustrates an auto-ranging (AR) circuit that can be used to measure resistance of a component of a vehicle, in accordance with an implementation of the present subject matter.
Fig. 6 illustrates a method for guiding diagnostics of electrical and electronic components of a vehicle, in accordance with an implementation of the present subject matter.
Fig. 7 illustrates a method for guiding diagnostics of electrical and electronic components of a vehicle when a pinout box system is offline, in accordance with an implementation of the present subject matter.
Fig. 8 illustrates a method for guiding diagnostics of electrical and electronic components of a vehicle when a pinout box system is online, in accordance with an implementation of the present subject matter.

DETAILED DESCRIPTION

Diagnostic operations may be performed in a vehicle, such as a two-wheeled vehicle or a four-wheeled vehicle, to determine if components are functioning properly and to determine a cause of a faulty operation. The components of the vehicle may include electrical and electronic components, such as an Electronic Control Unit (ECU) of the vehicle and various components that are connected to the ECU, such as sensors, actuators, and transducers.

Sometimes, the electrical signal to be received by a component may not be received or may be received with lesser or greater magnitude as compared to a rated magnitude. The absence or decrease/increase in the magnitude of the electrical signal may be referred to as a faulty condition. The faulty condition may be due to any of a plurality of reasons, such as fault in a component that sends the electrical signal, a discontinuity in the connection between the sending component and the receiving component, a short circuit, and the like.

A conventional technique utilized for identifying a cause of the faulty condition involves usage of a multimeter. In accordance with the technique, test leads of test probe of the multimeter are connected to terminals of components of the vehicle, for example, to test continuity and measure resistance, current, and voltage. The identification of cause using a multimeter is to be performed by skilled personnel, as an improper connection to a terminal using a test lead may lead to damage of the terminal or a corresponding component.

Another conventional technique involves the usage of a pinout box, which can be connected to the ECU and the components to be connected to the ECU. The pinout box may include a plurality of ports through which test leads can be connected to the components to identify the cause of the faulty condition. However, identification of the cause using the pinout box may be a cumbersome process, as a considerable amount of effort and time is to be expended in identification of ports of the pinout box into which the test leads are to be inserted for identification of the cause. This is because the pinout box may include several ports, such as 80-100 ports, and therefore, a product manual may have to be used for identifying ports into which the test leads are to be inserted for identification of the cause. Further, the pinout box may be specific to a particular model of vehicle, as the number of components connected to the ECU, the number of pins of the ECU, and the pins of the ECU to which the components are connected may vary from one vehicle model to another.

An example of pinout box is known from Pico Technologies, "CAN Test Box User's Guide", pp.1-12 (2017).

The present subject matter relates to guided diagnostics of vehicles using a pinout box system. The present subject matter provides a pinout box system that facilitates performing diagnostic operations, also referred to as diagnostics, in a simple and error-proof manner. With the implementations of the present subject matter, faulty conditions can be identified in a quick, efficient, and reliable manner.

According to the present invention, a pinout box system that can guide performance of diagnostics on electrical and electronic components of a vehicle is provided. The pinout box system may be utilized to identify various faulty conditions, such as open circuit and short circuit. The pinout box system can be connected to the ECU and a plurality of components that are to be connected to the ECU, for providing a connection between the plurality of components and the ECU. The pinout box includes a first set of terminals that can be connected to the plurality of components through a wiring harness. Each terminal of the first set may be connected to a terminal of a second set of terminals, which may be connected to the ECU.

Each terminal of the first set has a corresponding port, into which a test lead of a test probe can be inserted for connecting to the terminal. The insertion of the test lead into a port corresponding to a terminal may facilitate testing a component connected to the terminal. The ports corresponding to the first set of terminals may be referred to as a first set of ports. To facilitate identification of a port into which a test lead is to be inserted for testing a component, the pinout box system includes a light emitter corresponding to each port. A light emitter corresponding to a port may be disposed near the port in the pinout box system. A light emitter corresponding to a port emits light to indicate that the test lead is to be inserted into the corresponding port for testing a selected component.

In an implementation, the component to be tested may be selected using an input device, such as a touchscreen-based display device or a knob, of the pinout box system. In response to the selection of the component, a controller of the pinout box system identifies a light emitter corresponding to the selected component. A light emitter corresponding to a component refers to the light emitter corresponding to a port, which in turn, corresponds to a terminal connected to the component. For example, the controller may identify the terminal to which the component is connected, the port corresponding to the identified terminal, and the light emitter corresponding to the identified port. In another example, the controller may utilize a lookup table indicating a light emitter corresponding to a component. The lookup table may be stored in a memory of the pinout box system.

The light emitters may also indicate when a test lead is not inserted into the port corresponding to the component and inserted into an incorrect port. For instance, if the test lead is inserted into an incorrect port, the light emitter corresponding to the incorrect port may emit light in a predetermined pattern or colour. This is facilitated by providing a switch in each port. The switch gets actuated when a test lead is inserted into the port and causes generation of an electrical signal. The electrical signal is received by the controller, which identifies the port into which the test lead is inserted based on the switch from which the electrical signal is received.

The present invention provides an improved pinout box system that significantly simplifies the diagnostics of electrical and electronic components of a vehicle. Since the ports into which test leads are inserted for testing a component is indicated using a corresponding light emitter, the testing process becomes a simpler and a less error-prone process. The indication of insertion into an incorrect port further reduces the manual error associated with the testing process. The testing using the pinout box system can be performed without any rewiring, removal of components from the vehicle, or removal of covers, panels, casings and the like of the vehicle.

The pinout box system of the present invention can be utilized for a plurality of vehicle types. For instance, the memory may store lookup tables corresponding a plurality of vehicle types. The controller may select a lookup table corresponding to a given vehicle type, and utilize the selected lookup table to identify a light emitter corresponding to a selected component of the vehicle type.

The above and other features, aspects, and advantages of the subject matter will be better explained with regard to the following description, appended claims, and accompanying figures.

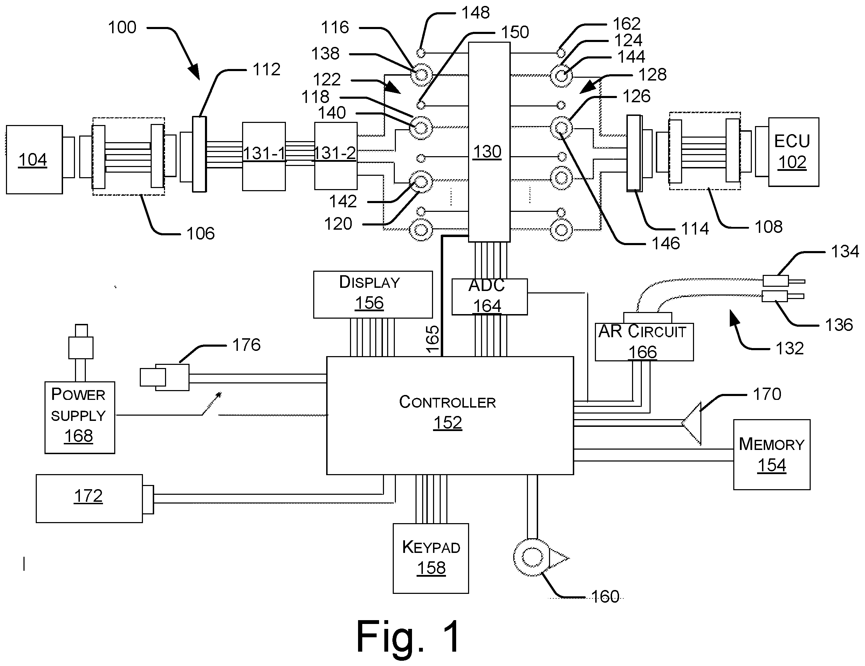

Fig. 1 illustrates a block diagram representation of a pinout box system 100, in accordance with an implementation of the present invention. The pinout box system 100 may connect an electronic control unit 102 (ECU) of a vehicle (not shown in Fig. 1) with components (not shown in Fig. 1) of the vehicle that are to be connected to the ECU 102. Such a connection provided by the pinout box system 100 may facilitate performing diagnostics of components of the vehicle. The diagnostics of the components includes testing the ECU 102 and the components to be connected to the ECU 102. The vehicle may be of a first vehicle model, and may be referred to as a first vehicle.

The components that are to be connected to the ECU 102 may be hereinafter referred to as "components" and may include sensors and actuators. Example sensors are a manifold pressure sensor, which provides information of manifold pressure of engine of the vehicle to the ECU, an ignition sensor, which provides information as to whether a key is inserted into a keyhole of the vehicle, and a throttle position sensor, which provides information of position of the throttle to the ECU. Example actuators are a cooling fan and a fuel injector.

The testing of a component may include, for example, measuring voltage output by the component, measuring current output by the component, measuring voltage received by the component, measuring current received by the component, measuring resistance of the component, checking for the presence of an open circuit or a short circuit in a connection originating from the component, or any combinations thereof. Similarly, testing of the ECU 102 may include measuring voltage at a pin of the ECU 102.

The wires or cables that are to connect the components to the ECU 102 may be aggregated in the form of a wiring harness 104. In an implementation, the ECU 102 and the wiring harness 104 may be connected to the pinout box system 100 through respective adapters. For example, a first adapter 106 may connect the wiring harness 104 to the pinout box system 100 and a second adapter 108 may connect the ECU 102 to the pinout box system 100. The first adapter 106 and the second adapter 108 may be different for different vehicles, such as different models of vehicles, as the ECU, the components, and the order in which the components are connected to the ECU may vary from one vehicle to another.

The pinout box system 100 may include a first connector 112 through which the pinout box system 100 is connected to the first adapter 106 and a second connector 114 through which the pinout box system 100 is connected to the second adapter 108. The connectors may be connectable to adapters corresponding to different vehicles. Accordingly, connectors may also be referred to as universal connectors. A connector may be a male connector if a side of the adapter that connects to the connector has a female connector or vice-versa. For instance, the first connector 112 may be a male connector, and may have a plurality of pins (not shown in Fig. 1), if a connector of the first adapter 106 that connects to the first connector 112 has a plurality of sockets. Through the pins/sockets of the first connector 112, the pinout box system 100 may be connected to the components. For instance, two or more cables originating from a component of the first vehicle may be connected to two pins/-sockets of the first connector 112 through the wiring harness 104. Similarly, through the pins/sockets of the second connector 114, the pinout box system 100 may be connected to the pins of the ECU 102.

Each pin/socket of the first connector 112 may be connected to a terminal of the pinout box system 100. For instance, a first pin/socket of the first connector 112 may be connected to a first terminal 116, a second pin/socket of the first connector 112 may be connected to a second terminal 118, and a third pin/socket of the first connector 112 may be connected to a third terminal 120. The terminals that are connected to pins/sockets of the first connector 112 may be collectively referred to as a first set of terminals 122. As will be understood, when the wiring harness 104 is connected to the first connector 112, a terminal of the first set of terminals 122 may be connected to a component of the first vehicle. In an example, two terminals of the first set of terminals 122 may be connected to a component of the first vehicle, as two cables, such as one positive and one ground, may originate from a component and may be connected different terminals. For instance, a first cable from the first component may be connected to the first terminal 116 and a second cable from the first component may be connected to the second terminal 118. The first set of terminals 122 may be disposed closer to the first connector 112 than the second connector 114, and may be referred to as wiring-harness-side terminals.

Each pin/socket of the second connector 114 may be connected to a terminal of the pinout box system 100. For instance, a fourth pin/socket of the second connector 114 may be connected to a fourth terminal 124 and a fifth pin/socket of the second connector 114 may be connected to a fifth terminal 126. The terminals that are connected to pins/sockets of the second connector 114 may be collectively referred to as a second set of terminals 128. When the ECU 102 is connected to the second connector 114, a terminal of the second set of terminals 128 may be connected to a pin of the ECU 102. The second set of terminals 128 may be disposed closer to the second connector 114 to facilitate easier connection to the second connector 114, and may be referred to as ECU-side terminals.

Each terminal of the first set of terminals 122 may be connected to a terminal in the second set of terminals 128. For instance, the first terminal 116 may be connected to the fourth terminal 124. Therefore, the first set of terminals 122 are connected to the ECU 102 through the second set of terminals 128. Further, a component of the first vehicle may be connected to the ECU 102 through a pin/socket of the first connector 112, a terminal of the first set of terminals, a terminal of the second set of terminals, a pin/socket of the second connector 114. In this manner, the pinout box system 100 provides a connection between a component and the ECU 102.

In an implementation, the connection between a terminal of the first set of terminals 122 and a terminal of the second set of terminals 128 may be through a control circuit 130. The control circuit 130 may include a plurality of control switches (not shown in Fig. 1), where each switch is connected to a terminal of the first set of terminals 122 and to a terminal of the second set of terminals 128. A control switch controls the flow of electric current between terminals to which it is connected. For instance, the control circuit 130 may include a first control switch connecting the first terminal 116 with the fourth terminal 124. When the first control switch is turned off, no electric current flows between the first terminal 116 and the fourth terminal 124. The switches of the control circuit 130 may provide protection to the ECU 102 from overvoltage occurring at the component side and vice-versa, as will be explained later.

In addition, the pinout box system 100 may include one or more protection circuits to provide overvoltage protection, overcurrent protection, electrostatic discharge (ESD) protection, and reverse current protection. The protection circuits may be the protection circuits 131-1 and 131-2. The protection circuits may be connected between the first connector 112 and the first set of terminals 122. Therefore, the protection circuits provide protection to the ECU 102 from overvoltage, overcurrent, ESD, and reverse current from the components and vice-versa. The components and the working of the protection circuits will be understood by a person skilled in the art and will not be explained herein for the sake of brevity.

Each terminal of the pinout box system 100 has a corresponding port. A test lead of a test probe 132, such as a first test lead 134 or a second test lead 136, may be inserted into a port corresponding to a terminal to connect the test lead to the terminal. For instance, the first test lead 134 may be inserted into a first port 138 (which corresponds to the first terminal 116) to connect to the first terminal 116. Similarly, the second test lead 136 may be inserted into a second port 140 (which corresponds to the second terminal 118) to connect to the second terminal 118. In an example, the first test lead 134 may be a positive test lead and may have to be inserted into a port corresponding to a positive terminal. Similarly, the second test lead 136 may be a ground test lead and may have to be inserted into a port corresponding to a ground terminal. Accordingly, if the first terminal 116 is connected to a positive cable of the first component and the second terminal 118 is connected to a ground cable of the first component, the first test lead 134 is to be inserted into the first port 138 and the second test lead 136 is to be inserted into the second port 140 for testing the first component.

The ports corresponding to the first set of terminals 122 may be collectively referred to as a first set of ports. Accordingly, the first set of ports may include the first port 138, the second port 140, and a third port 142 (corresponding to the third terminal 120). The ports corresponding to the second set of terminals 128 may be collectively referred to as a second set of ports. Accordingly, the second set of ports may include a fourth port 144 (corresponding to the fourth terminal 124) and a fifth port 146 (corresponding to the fifth terminal 126). Therefore, through the ports corresponding to the terminals, the test leads may be connected to the components and to the ECU 102. The connection of the test leads to the components and to the ECU 102 facilitates testing the components and the ECU 102.

According to the invention, the pinout box system 100 includes a light emitter corresponding to each port. The light emitter may be, for example, a light emitting diode (LED) or may include a plurality of LEDs. A light emitter corresponding to a port may be disposed adjacent to the port. For instance, a first light emitter 148 may be disposed adjacent to the first port 138, to which the first light emitter 148 corresponds. Similarly, a second light emitter 150 may correspond to the second port 140 and may be disposed adjacent to the second port 140. The light emitters corresponding to the first set of ports may are referred to as a first of light emitters. Similarly, the light emitters corresponding to the second set of ports may be referred to as a second of light emitters. A light emitter corresponding to a port may also be referred to as corresponding to a terminal to which the port corresponds and as corresponding to a component to which the terminal is connected. For instance, the first light emitter 148 may be referred to as corresponding to the first terminal 116 and to the first component.

The light emitters may facilitate easy identification of the ports into which test leads are to be inserted for testing a given component. For instance, if a component to be tested is a first component and if the first component is connected to the first terminal 116, a test lead is to be inserted into the first port 138 to test the first component. Accordingly, the first light emitter 148 may emit light to indicate that the test lead is to be inserted into the first port 138. The provision of a light emitter corresponding to each port facilitates easy identification of ports, thereby eliminating the usage of a product manual and the like for identifying a port corresponding to a component to be tested.

The illumination of the light emitters is controlled by a controller 152 of the pinout box system 100. The controller 152, amongst other capabilities, may be configured to fetch and execute computer-readable instructions stored in a memory 154. The controller 152 may be implemented as one or more microprocessors, microcomputers, microcontrollers, digital signal processors, state machines, logic circuitries, and/or any devices that manipulate signals based on operational instructions. The functions of the controller 152 may be provided through the use of dedicated hardware as well as hardware capable of executing machine-readable instructions. The memory 154 may include any computer-readable medium known in the art including, for example, volatile memory, such as static random-access memory (SRAM) and dynamic random-access memory (DRAM), and/or non-volatile memory, such as read only memory (ROM), erasable programmable ROM, and flash memories.

The controller 152 may determine a light emitter that is to emit light in response to a selection received on an input device of the pinout box system 100. The input device may be, for example, a touchscreen-based display 156 (hereinafter referred to as "the display 156"), a keypad 158, or a knob 160. In some implementations, more than one of the aforementioned input devices or another input device may be included in the pinout box system 100. Further, in an implementation, all of the aforementioned input devices may be included in the pinout box system 100, as illustrated in Fig. 1. The selection received may include, for example, selection of the vehicle having the components and the ECU connected to the pinout box system 100. The selection may also be a selection of a component to be tested. For instance, upon connection of the components and the ECU 102 of the first vehicle to the pinout box system 100, the first vehicle may be selected by a testing person. Further, the first component may be selected as the component to be tested in the first vehicle. Based on the selection, the controller 152 may identify that the first vehicle and the first component are selected.

To facilitate determination of a light emitter corresponding to a selected component and a selected vehicle by the controller 152, the memory 154 may have stored thereon component configurations corresponding to a plurality of vehicles, such as the first vehicle. The component configuration corresponding to a vehicle may indicate, for example, components of the vehicle and a terminal of the first set of terminals 122 to which a component would be connected in response to a connection of the components with the pinout box system 100 (e.g., through the wiring harness 104). Accordingly, based on a selection of a vehicle received in the input device, the controller 152 may determine the component configuration that is to be utilized. Further, upon selection of a component in the input device, the controller 152 determines a terminal of the first set of terminals 122 to which the selected component is connected. Further, the controller 152 determines the port corresponding to the determined terminal and the light emitter corresponding to the determined port. Subsequently, the controller 152 causes illumination of the determined light emitter.

The component configuration may also indicate a terminal of the second set of terminals 128 to which an ECU pin to be connected to a particular component would be connected. Therefore, upon selection of an ECU-component connection, such as an ECU-first component connection, for testing, the controller 152 may determine a terminal of the second set of terminals 128 through which the ECU 102 is connected to the first component. For instance, the controller 152 may determine a terminal to which a pin of the ECU 102 to be connected to the component, such as the first component, is connected. The controller 152 may also determine the port corresponding to the determined terminal and the light emitter corresponding to the determined port. Subsequently, the controller 152 may cause illumination of the determined port of the second set of ports.

In an implementation, the component configuration corresponding to a vehicle may include a lookup table corresponding to the vehicle. The lookup table corresponding to a vehicle may indicate a light emitter corresponding to a component of the vehicle. For example, if the first component is connected to the first terminal 116, and if the first component is selected for being tested, the controller 152 may determine, based on the lookup table corresponding to the first vehicle, that the light emitter corresponding to the first component is the first light emitter 148 and cause its illumination.

A lookup table corresponding to a vehicle may also indicate a light emitter of the second set of light emitters corresponding to an ECU-component connection, such as an ECU-first component connection. A light emitter corresponding to an ECU-component connection may refer to a light emitter corresponding to a port that corresponds to a terminal connected to the ECU pin to be connected to the component. For instance, if the ECU pin to be connected to the first component is connected to the fourth terminal 124, the light emitter corresponding to the ECU-first component connection is a light emitter 162, which corresponds to the fourth port 144, which in turn corresponds to the fourth terminal 124.

Although the illumination of light emitters of the second set is explained as happening in response to a selection of an ECU-component selection, in an implementation, the illumination of light emitters of the second set may be performed in response to selection of a component. Such an illumination may be performed after illumination of the light emitter of the first set corresponding to the component. For instance, upon selection of the first component, the first light emitter 148 may be caused to emit light. Upon insertion and subsequent removal of the test lead from the first port 138, the light emitter 162 may be caused to emit light, indicating that the test lead is to be inserted into the fourth port 144 to test the ECU-first component connection. In this manner connections originating from and leading to a component may be tested upon selection of the component. Therefore, a complete testing is facilitated by the pinout box system 100.

In an implementation, the pinout box system 100 may include an analog-to-digital converter (ADC) 164 that digitizes analog values output by the control circuit 130 and supplies the digitized values to the controller 152. The controller 152 may also supply control signals in digital form, such as logic-1 signals, to the control circuit 130 through a digital communication line 165.

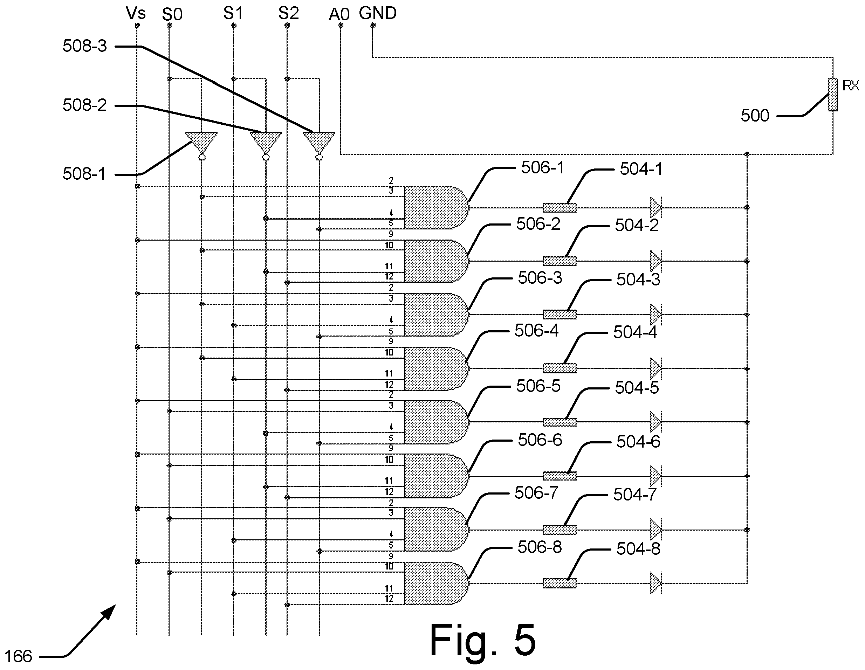

The pinout box system 100 may also include an auto-ranging (AR) circuit 166 that facilitates measurement of resistance of a component or resistance at a pin of the ECU 102. The AR circuit 166 may be connected to the component through the test leads of the test probe 132 for facilitating measurement of the resistance. The AR circuit 166 will be explained with reference to Fig. 5.

In addition to the aforementioned parts, the pinout box system 100 may include a power supply 168 for supplying power to the controller 152, a buzzer 170 for outputting a sound on satisfaction of a predetermined condition, a communication module 172 that facilitates communication of the pinout box system 100 with remote devices, and a programming cable 174. The power supply 168 may be an external power supply or an internal power supply, such as a rechargeable battery. The condition at which the buzzer 170 outputs a sound may be, for example, when the voltage or current received at a terminal is high or if a test lead is inserted into an incorrect port. The pinout box system 100 may communicate with remote devices, such as a dealer management server or a control server, for communicating diagnostics data. The programming cable 174 may be, for example, a USB (Universal Serial Bus) cable and may be utilized for connecting the controller 152 with an external computing device (not shown in Fig. 1) for configuration, programming, and updating purposes. For instance, component configuration corresponding to a new vehicle may be uploaded to the memory 154 through the programming cable 174.

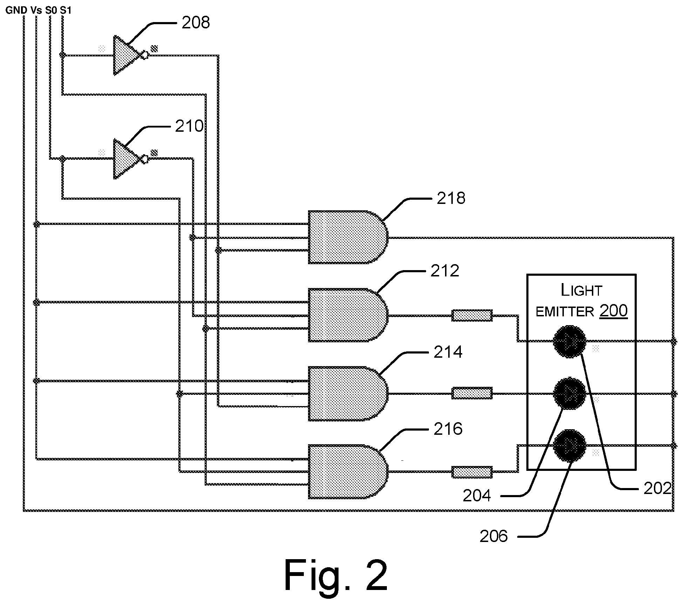

Fig. 2 illustrates a light emitter 200 that is to emit light to facilitate identification a port for insertion of a test lead, in accordance with the present invention. The light emitter 200 may be any light emitter of the first set of light emitters or the second set of light emitters. The light emitter 200 may be connected to the controller 152 through the control circuit 130 (not shown in Fig. 2). Further, the light emitter 200 may receive a logic-1 signal from the control circuit 130. The control circuit 130 may, in turn, receive the logic-1 signal from the controller 152 through the digital communication line 165. The logic-1 signal may be, for example, a signal with a voltage of 5 V. Upon receiving the logic-1 signal, the light emitter 200 may emit light. As will be understood, the controller 152 may provide the logic-1 signal to the light emitter 200 if a component corresponding to the light emitter 200 is selected at the input device. Based on emission of light by the light emitter 200, the testing person may insert a lead into the port corresponding to the test lead for testing the component.

In some cases, to test a component, the first test lead 134 may have to be inserted into one port and the second test lead 136 may have to be inserted into another port simultaneously. For instance, to measure a voltage output by the first component, the first test lead 134 may have to be inserted into the first port 138 and the second test lead 136 may have to be inserted into the second port 140, as the first component may be connected to the first terminal 116 and the second terminal 118. To facilitate distinguishing between the ports into which the first test lead 134 and the second test lead 136 are to be inserted, the light emitters corresponding to the ports may emit light of different colours. For instance, the first light emitter 148 may emit light in a first colour, such as blue, and the second light emitter 150 may emit light in a second colour, such as green. To facilitate emission of different colours by different light emitters, in an implementation, each light emitter may be a multi-colour light emitter, i.e., can emit light in a plurality of colours. The colour emitted by the light emitter may be controlled to indicate the test lead that is to be inserted into its corresponding port.

In an implementation, the light emitter 200 may include a plurality of LEDs that emit light in mutually different colours. For example, the light emitter 200 may include a first LED 202 to emit light of red colour, a second LED 204 to emit light of green colour, and a third LED 206 to emit light of blue colour. Accordingly, the light emitter 200 may be referred to as an RGB (red-green-blue) LED. The LEDs may be connected to the control circuit 130 and the controller 152 through a set of logic gates. The set of logic gates may be specific to the light emitter 200. The controller 152 may supply control signals to the logic gates such that, for emission of light of first colour, an LED that emits light of first colour receives a logic-1 signal. For instance, consider that the light emitter 200 is to emit blue colour. In such a case, the controller 152 may output control signals such that the third LED 206 receives a logic-1 signal. In an example, the set of logic gates may be connected such that, for a particular control signal or a combination of control signals, a single LED of the light emitter 200 is activated, i.e., receives logic-1 signal. The set of logic gates and the activation of an appropriate LED based on the control signals, in accordance with an implementation, will be explained below:

The set of logic gates may include a first NOT gate 208 and a second NOT gate 210. The first NOT gate 208 may receive a control signal S0 and the second NOT gate 210 may receive another control signal S1 from the controller 152. The control signals S0 and S1 may each be a logic-0 signal or a logic-1 signal. The set of logic gates may also include a first AND gate 212, a second AND gate 214, and a third AND gate 216. An output of the first AND gate 212, an output of the second AND gate 214, and an output of the third AND gate 216 may be connected an anode terminal of the first LED 202, an anode terminal of the second LED 204, and an anode terminal of the third LED 206 respectively. A fourth AND gate 218 may be connected to the cathode terminals of each of the first LED 202, the second LED 204, and the third LED 206.

A voltage 'Vs' may be supplied to an input terminal of each of the four AND gates. A ground terminal 'GND' may be connected to the cathode terminals of each of the three LEDs. The first AND gate 212 may receive S1 and S0' (an inverted signal of S0, which is obtained from the first NOT gate 208) as its input. The second AND gate 214 may receive S0 and S1' (from the second NOT gate 210) as its input. The third AND gate 216 may receive S0 and S1 as its input. Further, the fourth AND gate 218 may receive S0' and S1' from the first NOT gate 208 and the second NOT gate 210 respectively.

The aforesaid connection of the set of gates with the LEDs facilitates emission of different colours for different combinations of the control signals S0 and S1. For instance, for a combination of S0=0 and S1=0, each of the first AND gate 212, the second AND gate 214, and the third AND gate 216 outputs a logic-0 signal. Accordingly, none of the three LEDs receive a logic-1 signal at their respective anode terminals. Further, the cathode terminals of the three LEDs receive a logic-1 signal, as the fourth AND gate 218 outputs a logic-1 signal. Therefore, the light emitter 200 does not emit light at this condition. This may be the case when a component corresponding to the light emitter 200 is not selected for testing purposes.

For a combination of S0=0 and S1=1, the first AND gate 212 may output a logic-1 signal, while the second, third, and fourth AND gates 214, 216 and 218 output a logic-0 signal. Accordingly, the first LED 202 is activated, and the light emitter 200 emits light of red colour. For a combination of S0=1 and S1=0, the second AND gate 214 may output a logic-1 signal, while the second, third, and fourth AND gates 214, 216, and 218 output a logic-0 signal. Accordingly, the second LED 204 is activated, and the light emitter 200 emits light of green colour. Similarly, for a combination of S0=1 and S1=1, the third LED 206 is activated and the light emitter 200 emits light of blue colour. Therefore, by adjusting the value of the control signals, the colour of light emitted by the light emitter 200 may be controlled. In an example, one of the colours that can be emitted by the light emitter 200 may be reserved for the first test lead 134 and another colour that can be emitted by the light emitter 200 may be reserved for the second test lead 136. Further, the colour to be emitted by the light emitter 200 may be decided based on whether the first test lead 134 or the second test lead 136 is to be inserted into the port corresponding to the light emitter 200. For instance, if the first test lead 134 is to be inserted into the port corresponding to the light emitter 200, and if the colour reserved for the first test lead 134 is blue, the controller 152 may supply control signals S0=1 and S1=1 to the set of logic gates. Accordingly, by looking at the emission of blue colour by the light emitter 200, the testing person may insert the first test lead 134 into the port corresponding to the light emitter 200.

In an implementation, a third colour that can be emitted by the light emitter 200, such as red colour, may be reserved for a particular condition. Upon satisfaction of the condition, the light emitter 200 may be caused to emit of that colour. In an example, the condition may be insertion of a test lead into an incorrect port. For instance, consider that the light emitter 200 is the light emitter corresponding to the third port 142 and consider that the first test lead 134 is to be inserted into the first port 138. In such a case, the first light emitter 148 may emit light of blue colour. Now, if the first test lead 134 is inserted into the third port 142 instead of the first port 138, the light emitter 200 (which corresponds to the third port 142) may emit light of red colour. By looking at the emission of light red colour, the testing person may realize that the first test lead 134 is to be inserted into another port, and not the third port 142. Subsequently, by looking at the emission of light of blue colour by the first light emitter 148, the testing person may insert the first test lead 134 into the first port 138. The detection that the test lead is inserted into an incorrect port may be performed by the controller 152. In another example, the condition for which the third colour is reserved may be receipt of a faulty electrical signal, such as an electrical signal of a high current, at a terminal corresponding to the light emitter.

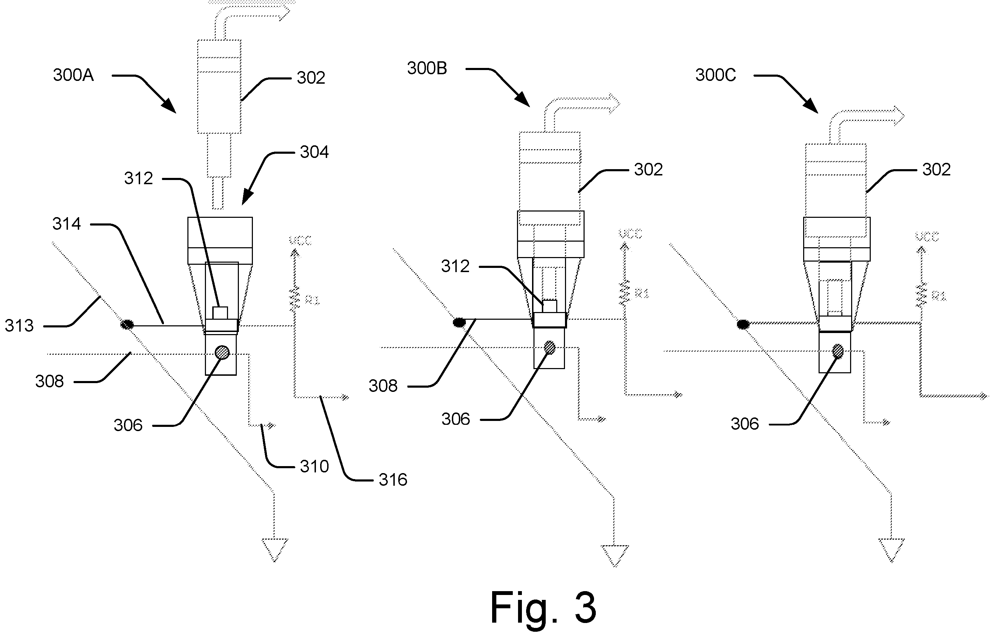

Fig. 3 illustrates insertion of a test lead 302 into a port 304, in accordance with an implementation of the present invention. The test lead 302 may be the first test lead 134 or the second test lead 136. Further, the port 304 may be any port of the first set of ports. The terminal corresponding to the port 304 may be the terminal 306, which may be any one of the first set of terminals 122. The terminal 306 may be connected to a component through a connection 308. Further, through a connection 310, the terminal 306 may be connected to a terminal of the second set of terminals.

By inserting the test lead 302 into the port 304, the test lead 302 can be connected to the terminal 306. The section 300A illustrates a scenario where the test lead 302 is not inserted into the port 304. The sections 300B and 300C illustrate the scenarios where the test lead 302 is partially inserted and wholly inserted into the port 304 respectively.

The pinout box system 100 may include a switch 312 disposed in the port 304 and connected to the terminal 306. The switch 312 may be, for example, a miniature snap-action switch, also referred to as a microswitch. One end of the switch 312 may be connected to a ground line 313 through a connection 314 and another end may be connected to the controller 152 (not shown in Fig. 3) through a connection 316. The controller 152 may also be connected to a voltage supply supplying a voltage Vcc through a pull-up resistor R1 and the connection 316. In an example, the connection to the controller 152 may be through the control circuit 130.

The switch 312 may get actuated in response to a complete insertion of the test lead 302 into the port 304, as illustrated in the scenario 300C. The actuation of the switch 312 causes a change in the voltage received by the controller 152 from the switch 312. Such a change facilitates determination that the switch 312 is actuated. For instance, when the switch 312 gets actuated, the controller 152 is connected to ground through the connections 314 and 316. Accordingly, for a complete insertion of the test lead 302 into the port 304, the voltage received by the controller 152 drops from Vcc to 0 V. Once the voltage received from the switch 312 drops to 0 V, the controller 152 may deduce that the test lead 302 is inserted into the port 304.

As will be understood, each port of the pinout box system 100 may be provided with a switch that is connected to ground and the controller 152. Accordingly, the controller 152 may receive a voltage of Vcc or 0 V from each port of the pinout box system 100. Therefore, the controller 152 may determine the port into which the test lead 302 is inserted. If, based on the voltage received from various ports, the controller 152 determines that the voltage received from a designated port (a port into which the test lead 302 is to be inserted for testing a selected component) has not dropped to 0 V, and that the voltage from another port has dropped to 0 V, the controller 152 may deduce that the test lead 302 is inserted into an incorrect port. Subsequently, the controller 152 may control the light emitter (not shown in Fig. 3) corresponding to the incorrect port, such that the light emitter emits light of a colour reserved for incorrect insertions.

Although the provision of switch in a port is explained with reference to a port of the first set of ports, the explanation is also applicable for the second set of ports as well. For instance, a switch may be disposed in each port of the second set of ports and a voltage corresponding to each port may be received by the controller 152. Based on drop in the voltage received from a port, the controller 152 may determine a port of the second set of ports into which the test lead 302 is inserted.

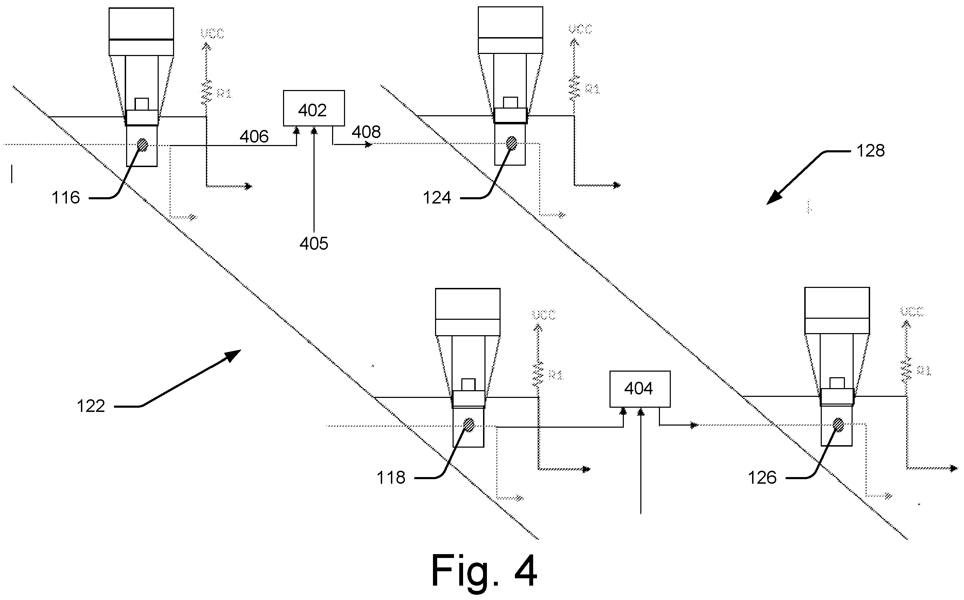

Fig. 4 illustrates a connection between a terminal of the first set of terminals 122 and a terminal of the second set of terminals 128. The first set of terminals 122 includes the first terminal 116 and the second terminal 118 and the second set of terminals 128 includes the fourth terminal 124 and the fifth terminal 126. The first terminal 116 may be connected to the fourth terminal 124 and the second terminal 118 may be connected to the fifth terminal 126. A control switch may connect a terminal of the first set and a terminal of the second set. For instance, a first control switch 402 may connect the first terminal 116 and the fourth terminal 124 and a second control switch 404 may connect the second terminal 118 and the fifth terminal 126. The control switches may be part of the control circuit 130. The function of the control switches will be explained below taking the first control switch 402 as an example.

The first control switch 402 may be actuatable (i.e., turned on or off) based on a control signal 405 received, for example, from the control circuit 130. The control circuit 130 may, in turn, receive the control signal from the controller 152. For instance, the first control switch 402 may be a transistor and the control signal 405 may be received at the base terminal of the transistor. When the first control switch 402 is turned on, the first terminal 116 is connected to the fourth terminal 124 and an electrical signal 406 at the first terminal 116 passes to the fourth terminal 124 and vice-versa. If the first control switch 402 is turned off, no electrical signal can be transmitted between the first terminal 116 and the fourth terminal 124. The controller 152 may actuate the first control switch 402 based on an electrical signal received at the first terminal 116 or the fourth terminal 124. In an implementation, the controller 152 may turn on the first control switch 402 if the electrical signal 406 received at the first terminal 116 is not likely to cause damage to the ECU 102. Similarly, the controller 152 may turn off the first control switch 402 if an electrical signal 408 received at the fourth terminal 124 is not likely to damage the component, such as the first component. For example, the controller 152 may turn on the first control switch 402 if the electric current received at the first terminal 116 from the first component or the electric current received at the fourth terminal 124 from the ECU 102 has a low value, such as less than a current threshold. As another example, the controller 152 may turn on the first control switch 402 and the second control switch 404 if the voltage received across the first terminal 116 and the second terminal 118 is of a low value, such as less than a voltage threshold.

To determine if the first control switch 402 is to be turned on, the controller 152 may receive the electrical signal being received at the first terminal 116 and at the fourth terminal 124 from the control circuit 130. In an example, the controller 152 may receive the electrical signal through the ADC 164. Based on the value of the received electrical signal, the controller 152 may decide as to whether the first control switch 402 is to be turned on. For instance, if the value of the electrical signal is low, the controller 152 may turn on the first control switch 402 by providing the control signal 405. Otherwise, the controller 152 may maintain the first control switch 402 at a turned-off state.

In this manner, the pinout box system 100 prevents flow of electrical signals from the components to the ECU 102 and vice-versa that may damage the ECU 102 or the components. Therefore, the pinout box of the present subject matter ensures a reliable and safe testing of the components of the first vehicle. For instance, the pinout box system 100 prevents damage to the components and the ECU 102 due to incorrect insertion of test leads that may lead to a short circuit.

In an implementation, if the electrical signal received at a terminal is of a high value, the controller 152 may also cause illumination of a light emitter corresponding to the terminal. For instance, if an electric current of a high value is received at the first terminal 116, the controller 152 may also cause illumination of the first light emitter 148. Similarly, if a high voltage is received at the first terminal 116 and the second terminal 118, the controller 152 may cause illumination of the first light emitter 148 and the second light emitter 150. The illumination may be in a colour, such as red colour, that is reserved for a faulty condition. Therefore, based on the illumination, the testing person may identify the presence of a potentially damaging electrical signal and may take measures to prevent the flow of the electrical signal.

Although the light emitters are explained as emitting light of different colours for identification purposes, in some implementations, a pattern of light emitted may be varied for different conditions. For instance, for identification of the port into which the first test lead 134 is to be inserted, the corresponding port may emit light blinking at a first frequency and for identification of the port into which the second test lead 136 is to be inserted, the corresponding port may emit light blinking at a second frequency. Similarly, for indicating that a test lead is inserted into an incorrect port, the light emitter corresponding to the incorrect port may emit light in a pattern, such as blinking of light at a third frequency. In some implementations, both colour and pattern may be used for the identification purposes.

Fig. 5 illustrates the AR circuit 166 that can be used to measure resistance of a component 500 of the first vehicle, in accordance with an implementation of the present subject matter. The component 500 may be, for example, the first component. The component 500 is illustrated as a resistor having a resistance Rx. To measure Rx, the first test lead 134 and the second test lead 136 may be connected to terminals of the component 500 by inserting the first test lead 134 and the second test lead 136 into the ports corresponding to the component 500 in the pinout box system 100. Further, the other end of the first test lead 134 may be connected to an analog output terminal 'A0' of the controller 152. Similarly, the other end of the second test lead 136 may be connected to the ground terminal 'GND' of the controller 152.

The AR circuit 166 includes a plurality of resistors, such as eight resistors 504-1, 504-2, ..., 504-8. The resistors may have mutually different resistance values. In an example, the resistance value of a resistor may be significantly different from that of the other resistors. For example, the resistance values of the eight resistors may be 20 Ω, 200 Ω, 2000 Ω, 20 KΩ, 200 KΩ, 2 MΩ, 20 MΩ, 200 MΩ. The purpose of providing resistors having significantly different resistances will be explained later.

An electrical signal, such as an electric current, may be supplied by a power supply (not shown in Fig. 5) to the component 500 through one of the plurality of resistors. The voltage supplied by the power supply may be 'Vs'. The voltage appearing across the component 500 may indicate the resistance Rx, as the voltage depends on Rx and the resistance of the resistor through which the electrical signal is received by the component 500, as represented below:

$$Vx = \frac{Rx}{Rx + R_{504}} * Vs$$

where Vx is the voltage appearing across the component 500 and $R_{504}$ is the resistance of the resistor through which the electrical signal is supplied to the component 500. The voltage Vx may appear across the first test lead 134 and the second test lead 136. In an example, the voltage Vx may be digitized by the ADC 164 and supplied to the controller 152, which measures the voltage Vx. Based on the measured voltage, Vs, and $R_{504}$, the controller 152 may determine the resistance Rx of the component 500.

If Rx differs significantly from $R_{504}$ (e.g., Rx is in the order of ohms and $R_{504}$ is in the order of megaohms), the Rx determined based on Vx may not be accurate. To facilitate accurate determination of Rx, the controller 152 may sequentially select one of the plurality of resistors and may cause supply of the electrical signal to the component 500 through the selected resistor. For instance, the controller 152 may first select the first resistor 504-1 and may cause supply of the electrical signal to the component 500 through the first resistor 504-1 and measure a first value of Vx (also referred to as a first voltage). Subsequently, the controller 152 may select the second resistor 504-2 and may supply the electrical signal to the component 500 through the second resistor 504-2 and measure a second value of Vx (also referred to as a second voltage). The voltage Vx obtained for each of the selected resistors may be monitored by the controller 152. Based on the Vx monitored for various resistors, the controller 152 may determine the resistor that has a resistance closer to Rx than all the other resistors. The resistor having a resistance close to Rx causes the Vx value to be close to 0.5*Vs, as a closeness of Rx and a resistance causes an approximately equal division of Vs between the resistor and the component 500. For instance, if Rx is equal to 10 Ω, $R_{504-1}$ (first resistance) equals 20 Ω and $R_{504-2}$ (second resistance) equals 200 Ω, the Vx obtained for $R_{504-1}$ may be 0.33*Vs, while the

Vx obtained for $R_{504-2}$ may be 0.048*Vs. Therefore, the controller 152 may deduce that the first resistance is closer to the resistance of the component 500 than the second resistance, Therefore, of Vx values received for all the resistors, the Vx value closest to 0.5*Vs may be identified and the resistor for which this Vx value is obtained may be identified. Subsequently, the resistance Rx may be determined based on the Vx value closest to 0.5*Vs and the identified resistor, such as the first voltage and the first resistor 504-1 respectively.

The selection of the resistor through which the electrical signal is supplied to the component 500 will now be described. To facilitate selection of a resistor, each resistor may be connected to output of an AND gate. For instance, the first resistor 504-1 may be connected to an output of AND gate 506-1 and the second resistor 504-2 may be connected to an output of AND gate 506-2. The input of each AND gate may receive a voltage signal 'Vs'. Further, the input of each AND gate may receive one or more of: S0, S1, S2, S0', S1', and S2'. The control signals S0, S1, and S2 may be provided by the controller 152. The control signals of S0', S1', and S2' may be provided by NOT gates 508-1, 508-2, and 508-3, receiving S0, S1, and S2 respectively from the controller 152. It is to be noted that the control signals S0 and S1 explained herein is different than that explained with reference to Fig. 2. Here, the controller 152 provides three signals because the number of resistors from which a resistor is to be selected is 8 (= $2^3$). Accordingly, the signals provided by the controller 152 may be increased or decreased depending on the number of resistors. The control signals S0, S1, S2, S0', S1', and S2' may be connected to the AND gates such that for a given combination of S0, S1, and S2 output by the controller 152, a single AND gate outputs a logic-1 signal. For instance, for a combination of S0 = 0, S1 = 0, S2 = 0, the AND gate 506-1 alone outputs a logic-1 signal. Similarly, for a combination of S0 = 0, S1 = 0, S2 = 1, the AND gate 506-2 alone outputs a logic-1 signal. Therefore, by adjusting the values of the control signals S0, S1, and S2, the controller 152 may select one of the resistors for supplying the electrical signal to the component 500.

The provision of resistors of different values facilitates accurate determination of the resistance of the component 500. Further, the selection of a resistor by the controller 152 by supplying control signals eliminates manual involvement in the measurement of resistance. For example, the testing person does not have to adjust a knob position to vary the resistor through which the electrical signal is supplied to the component 500.

Although Fig. 5 has been explained with reference to determination of resistance of a component, the explanation is also applicable to measurement of resistance between two pins of the ECU 102 as well.

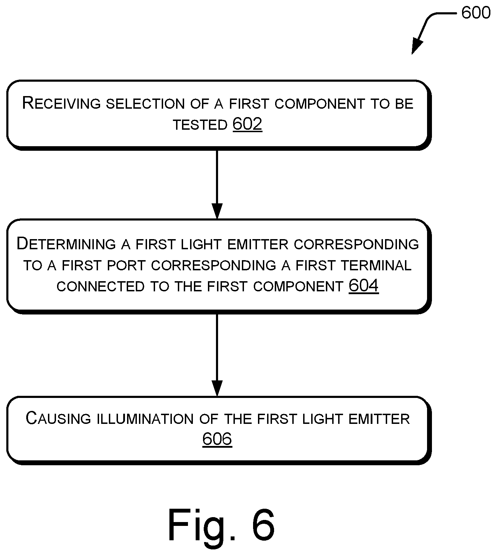

Figs. 6-8 illustrate methods 600-800 for guiding diagnostics of components of a vehicle, in accordance with the present invention. The order in which the methods 600-800 is described is not intended to be construed as a limitation, and any number of the described method blocks may be combined in any order to implement the methods 600-800, or an alternative method. Furthermore, the methods 600-800 may be implemented by processor(s) or computing device(s) through any suitable hardware, non-transitory machine-readable instructions, or a combination thereof.

The steps of the methods 600-800 are performed by a pinout box system, such as the pinout box system 100. The pinout box system includes a first set of terminals to be connected to a plurality of components of the vehicle through a wiring harness and to an ECU of the vehicle. The components are the components to be connected to the ECU and may be, for example, sensors and, actuators. The pinout box system also includes a first set of ports. Each port of the first set of ports corresponds to a terminal of the first set of terminals. A test lead, such as the first test lead 134, of a test probe, such as the test probe 132, can be inserted into a port of the first set of ports to connect to a corresponding terminal. The pinout box system further includes a first set of light emitters, each of which corresponds to a port of the first set of ports. The pinout box system also includes a controller, such as the controller 152.

Referring to method 600, at block 602, a selection of a first component that is to be tested is received. The first component may be part of a vehicle, such as the first vehicle explained earlier. The selection may be received by the controller, for example, from an input device of the pinout box system. The input device may be, for example, a touchscreen-based display, a keypad, or a knob and may receive the selection of the first component from a testing person.

At block 604, a first light emitter corresponding to a first port corresponding to a first terminal that is connected to the first component is determined. The determination is performed by the controller. For performing the determination, the controller may utilize a component configuration stored in a memory of the pinout box system, as explained earlier.

At block 606, an illumination of the first light emitter is caused. Such an illumination facilitates identification of the port into which the test lead is to be inserted for testing the first component. In an implementation, the first component is to be connected to a second terminal, in addition to the first terminal. A second port corresponds to the second terminal. In such a case, the method 600 may include causing illumination of the first light emitter in a first colour. Further, a second light emitter corresponding to the second port may be determined and the second light emitter may be caused to illuminate in a second colour. The illumination in different colours may be achieved by utilizing RGB LEDs as the light emitters, and by supplying control signals that cause illumination of a particular colour by the RGB LEDs, as explained earlier.

In an implementation, if the test lead is inserted into a third port, instead of the first port, for testing the first component, the method 600 may include controlling illumination of a third light emitter corresponding to the third port in a third colour, to indicate that the test lead is inserted into an incorrect port. Alternatively, the third light emitter may be controlled such that it emits light in a pattern, such as blinking at a predetermined frequency. To prevent insertion of the test lead into an incorrect port, each port may be provided with a switch that gets actuated upon insertion of the test lead into the port, as explained earlier.

In an implementation, the pinout box system includes a fourth terminal, such as the fourth terminal 124, to connect the first terminal with the ECU and a control switch, such as the control switch 402, connecting the first terminal and the fourth terminal. The method 600 may include monitoring an electrical signal, such as electric current, received at the first terminal from the first component. Further, it may be determined that the electrical signal is unlikely to damage the ECU. The electrical signal may be determined to be unlikely to damage the ECU, for example, if a value of the electric current is low, such as less than a current threshold. Subsequently, the control switch may be turned on to allow flow of the electrical signal to the ECU.

The method 600 may also include determining resistance of the first component. For measuring the resistance, an electrical signal, such as electric current may be supplied to the first component. The electrical signal may be supplied through a resistor of an AR circuit, such as the AR circuit 166, which may include a plurality of resistors. The method 600 may include varying a resistor through which an electrical signal is supplied to the first component. For instance, the electrical signal may be supplied through one resistor of the AR circuit and subsequently, the electrical signal may be supplied through another resistor of the AR circuit. The resistors through which the electrical signal is supplied may be varied by varying control signals to AND gates of the AR circuit that are connected to the resistors, as explained earlier. Based on variation of the resistors, a first resistor is identified as having a resistance value closest to the resistance value of the first component. The identification may be based on a voltage appearing across the first component, as explained earlier. Subsequently, the resistance value of the first component is determined based on a voltage measured across the first component when the electrical signal is supplied through the first resistor.

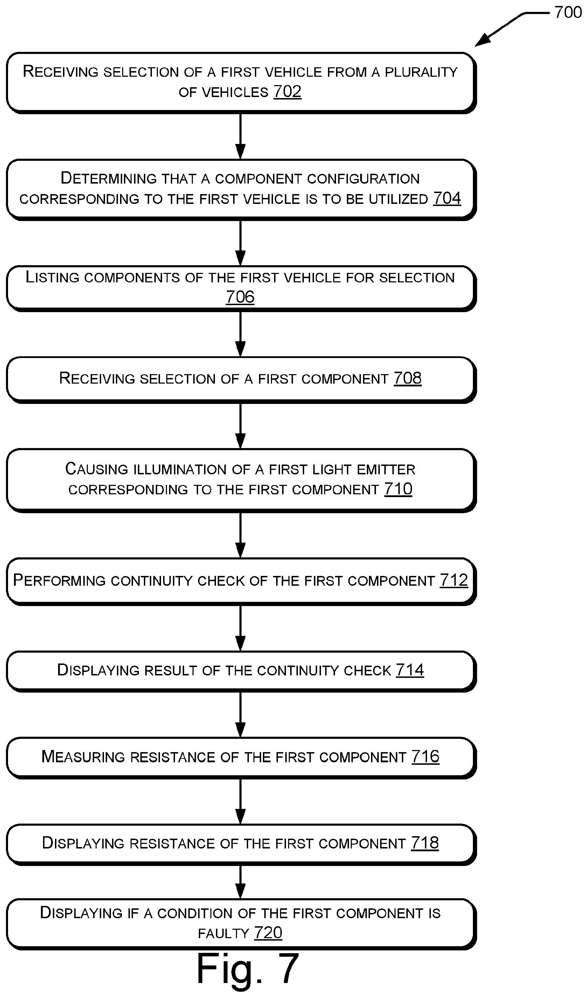

Fig. 7 illustrates a method 700 for testing a component of the vehicle when the pinout box system is offline, in accordance with an implementation of the present subject matter. The pinout box system may be referred to as being offline if it is connected to a vehicle that is not powered on. In such a case, no signal transmission happens from the ECU to the components and vice-versa. Accordingly, in this case, the electrical signals to and from the components cannot be measured.

At block 702, a selection of the first vehicle from a plurality of vehicles is received. The selection may be received, for example, by a display on which the plurality of vehicles is displayed as options. Based on the selection, at block 704, a determination may be performed that a component configuration corresponding to the first vehicle is to be utilized for identifying the components of the first vehicle, the connections to the terminals of the pinout box system from the components, and the like. At block 706, the components of the first vehicle identified may be listed as options on the display for selection by the testing person. In an implementation, before listing the components, categories of the components, such as sensors and actuators, may be listed first. Upon selection of one of the categories, a list of the components falling into the selected category, such as a list of all sensors, in the first vehicle may be displayed. In an example, in addition to the categories, an option for display of instructions may also be provided. The selection of the option for instructions may cause provision of instructions, such as verbal or pictorial, for testing a particular component. For instance, for testing the throttle position signal, an instruction to rotate the throttle of the vehicle may be provided.

At block 708, a selection of the first component is received. Subsequently, at block 710, the first light emitter corresponding to the first component is caused to illuminate. In addition, the second light emitter, which may also correspond to the first component, may also be caused to illuminate. In response to the test leads being inserted into the ports corresponding to the first component, at block 712, a continuity check is performed. The continuity check may facilitate ascertaining whether there is an open circuit in the first component. At block 714, a result of the continuity check, i.e., whether or not a continuity exists in the first component, is displayed.

At block 716, a resistance of the first component is measured. The measurement of the resistance may involve utilization of the AR circuit, as explained earlier. The measured resistance is displayed at block 718. At block 720, it may also be displayed as to whether the first component is faulty. The faulty condition of the first component may be determined based on the measured resistance. For instance, if the measured resistance is substantially equal to its rated resistance, it may be determined that the first component is not faulty. Otherwise, the first component may be determined to be faulty. The rated resistance may be stored in the memory, such as the memory 154.

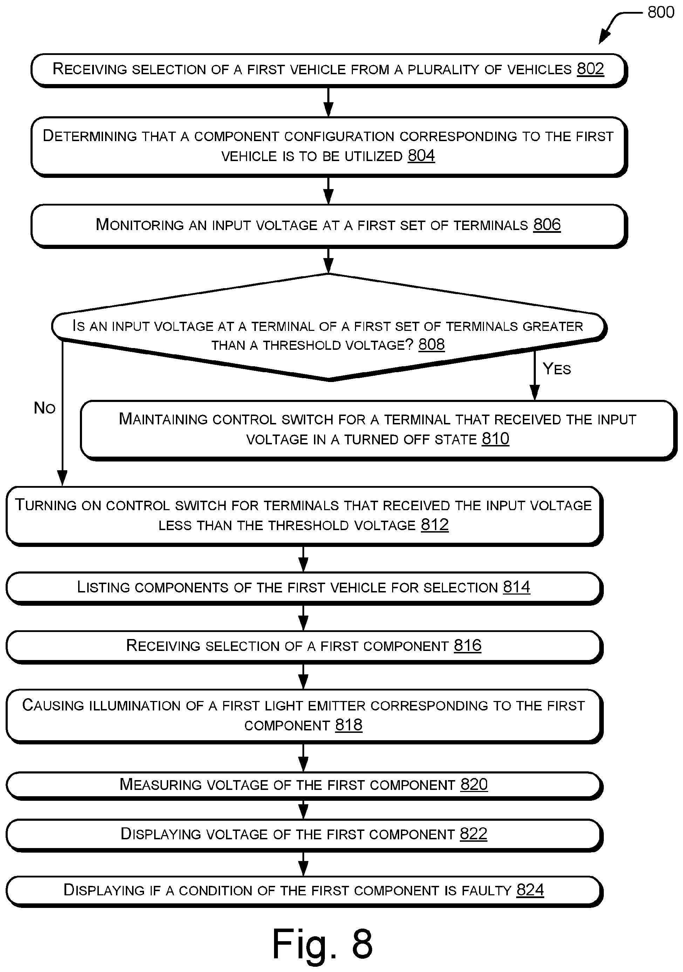

Fig. 8 illustrates a method 800 for testing a component of the vehicle when the pinout box system is online, in accordance with an implementation of the present invention. The pinout box system may be referred to as being online if it is connected to a vehicle that is powered on. As will be understood, in a powered-on vehicle, signals are exchanged between the components and the ECU. Accordingly, in the online condition, the pinout box system may measure magnitudes of the electrical signals.

At block 802, a selection of the first vehicle from a plurality of vehicles is received. Based on the selection, at block 804, a determination may be performed that a component configuration corresponding to the first vehicle is to be utilized for identifying the components of the first vehicle, the connections to the terminals of the pinout box system from the components, and the like.

At block 806, an input voltage received at the terminals of the first set of terminals form the components is monitored. The monitoring may be performed by the controller. At block 808, the input voltage is compared with a threshold voltage to ascertain if any of the input voltages may cause damage to the ECU. If the input voltage is determined to be greater than the threshold voltage, at block 810, it is determined that a control switch connected to the terminal at which the high input voltage (i.e., greater than the threshold voltage) is received should be in a turned off state. In addition, a light emitter corresponding to the terminal is caused to illuminate in a colour/pattern reserved for a high voltage. For example, if a high input voltage is received at the first terminal 116, the first control switch 402 may be kept in a turned off state and the first light emitter 148 may be caused to emit light of red colour.

At block 812, control switches connected to the terminals at which high voltage is not received are turned on, to facilitate connection of the corresponding components with the ECU. At block 814, the components of the first vehicle may be listed as options on the display for selection by the testing person. Before listing the components, categories of the components may be listed first. Upon selection of one of the categories, a list of the components falling into the selected category in the first vehicle may be displayed.

At block 816, a selection of the first component is received. Subsequently, at block 818, the first light emitter corresponding to the first component is caused to illuminate. In addition, the second light emitter, which may also correspond to the first component, may also be caused to illuminate. In response to the test leads being inserted into the ports corresponding to the first component, at block 820, the voltage output by the first component, which is the voltage existing between the test leads, is measured. At block 822, the measured voltage may be displayed. Further, at block 824, it may be displayed as to whether the first component is faulty. The faulty condition of the first component may be determined based on the measured voltage. For instance, if the measured voltage is substantially equal to a rated voltage, it may be determined that the first component is not faulty. Otherwise, the first component may be determined to be faulty. A recommendation to replace the first component may also be provided. The rated voltage may be stored in the memory.

The pinout box system of the present invention significantly simplifies the testing of components to be connected to ECU and the ECU. Since a light emitter is provided corresponding to each port and since the light emitter corresponding to the port into which a test lead should be inserted is illuminated, the ports for insertion can be easily identified. Further, the testing process becomes simpler and a less error-prone, as manual error associated with identification of ports is eliminated. The illumination by a light emitter in response to insertion of test lead into an incorrect port prevents damage to the ECU, to the components, and to the pinout box system.

The testing using the pinout box system can be performed without any rewiring, removal of components from the vehicle, or removal of covers, panels, casings and the like of the vehicle. Since control switches connected between terminals of the pinout box system and are turned off to prevent flow of an electrical signal of a high current or voltage, the damage to the ECU and to the components can be prevented.

The pinout box system can be utilized for testing components of a plurality of vehicles without reconfiguration of the hardware. For instance, the memory may store lookup tables corresponding a plurality of vehicle types. The controller may select a lookup table corresponding to a given vehicle type, and utilize the selected lookup table to identify a light emitter corresponding to a selected component of the vehicle type. Further, the pinout box system may be utilized for testing new vehicles by uploading lookup table corresponding to the new vehicle to the memory of the pinout box system.

The pinout box system can be used to measure various electrical parameters associated with the components and the ECU, such as voltage, current, and resistance. Accordingly, the use of a multimeter for measurement of such parameters is eliminated. Further, the pinout box system can be used as a self-sufficient testing kit for testing several aspects of the components and the ECU.

The controller may display instructions to facilitate testing of the components. The instructions may be verbal, pictorial, or a combination of both. Such instructions augment the guidance provided through the light emitters. For instance, the controller may display instructions for checking throttle position signal by rotating the throttle of the vehicle. Accordingly, the testing process becomes much simpler and more efficient.

Although the present invention has been described with reference to specific embodiments, this description is not meant to be construed in a limiting sense. Various modifications of the disclosed embodiments will become apparent to persons skilled in the art upon reference to the description of the subject matter.

**Claims**

1.　A pinout box system (100) comprising:

a first set of terminals (122) to be connected to a plurality of components of a first vehicle through a wiring harness (104) and to an Electronic Control Unit, ECU, (102) of the first vehicle, wherein the plurality of components is to be connected to the ECU (102);
a first set of ports, wherein each port of the first set of ports corresponds to a terminal of the first set of terminals (122) and wherein a test lead (134,136) of a test probe (132) is insertable into a port of the first set of ports to connect to a corresponding terminal of the first set of terminals (122);
a first set of light emitters, wherein each light emitter of the first set of light emitters corresponds to a port of the first set of ports; and
a controller (152);
wherein the controller (152) being configured to:

receive a selection of a first component of the plurality of components that is to be tested;
determine a first light emitter (148) of first set of light emitters corresponding to a first port (138) of the first set of ports corresponding to a first terminal (116) of the first set of terminals (122) that is connected to the first component of the plurality of components; and
cause illumination of the first light emitter (148) of the first set of light emitters, to facilitate identification of the first port (138) of the first set of ports into which the test lead (134, 136) is to be inserted for testing the first component of the plurality of components.

2.　The pinout box system (100) as claimed in claim 1, comprising:

a second set of terminals (128) to connect the first set of terminals (122) to the ECU (102), wherein each terminal of the second set of terminals (128) is connected to a terminal of the first set of terminals (122),
a second set of ports, wherein each port of the second set of ports corresponds to a terminal of the second set of terminals (128) and wherein the test lead (134,136) of the test probe (132) is insertable into the each port of the second set of ports to connect to the corresponding terminal of the second set of terminals (128); and
a second set of light emitters, wherein each light emitter of the second set of light emitters corresponds to a port of the second set of ports, wherein the controller (152) is to:

receive a selection of a connection between the ECU (102) and the first component of the plurality of components as a connection to be tested;
determine the terminal of the second set of terminals (128) through which the ECU (102) is connected to the received first component of the plurality of components; determine a light emitter of the second set of light emitters corresponding to a port of the second set of ports that corresponds to the determined terminal of the second set of terminals (128); and cause illumination of the determined light emitter of the second set of light emitters.

3. The pinout box system (100) as claimed in claim 1, comprising:

a first connector (112) connected to the first set of terminals (122), to connect the first set of terminals (122) to the wiring harness (104); and a second connector (114) connected to the second set of terminals (128), to connect the second set of terminals (128) to the ECU (102).

4. The pinout box system (100) as claimed in claim 1, wherein the first component of the first set of components is to be connected to a second terminal (118) of the first set of terminals (122) and, to the first terminal (116) of the first set of terminals (122), wherein a second port of the first set of ports corresponds to the second terminal (118) of the first set of terminals (122), and wherein the controller is to:

cause illumination of the first light emitter (148) in a first colour; determine a second light emitter (150) corresponding to the second port (140) of the first set of ports; and cause illumination of the second light emitter (150) in a second colour.

5. The pinout box system (100) as claimed in claim 4, wherein the first light emitter (148) comprises:

a plurality of light emitting diodes, LEDs, wherein each of the plurality of LEDs are emitting light in mutually different colours, wherein a LED of the plurality of LEDs that receives a logic-1 signal determines a colour emitted by the first light emitter (148), wherein the pinout box system (100) comprises: a set of logic gates connecting the controller (152) to the plurality of LEDs, and wherein, to cause the first light emitter (148) to emit light of the first colour, the controller (152) is configured to: supply control signals to the set of logic gates connected to the plurality of LEDs, wherein the LED of the plurality of LEDs that is capable of emitting light in the first colour receives the logic-1 signal.

6. The pinout box system (100) as claimed in claim 1, wherein, in response to insertion of the test lead (134,136) into a third port (142) of the first set of ports for testing the first component of the plurality of components, the controller (152) is configured to cause at least one of:

illumination of a third light emitter (206) corresponding to the third port (142) of the first set of ports in a third colour; and emission of a pattern of light by the third light emitter (206), to indicate that the test lead (134, 136) is inserted into an incorrect port.

7. The pinout box system (100) as claimed in claim 6, comprising:
a switch disposed in the third port (142) of the first set of ports, wherein the switch is to get actuated in response to the insertion of the test lead (134, 136) into the third port (142) of the first set of ports, and wherein the actuation of the switch causes a change in a voltage received by the controller (152) from the switch, and wherein the controller (152) is configured to:
determine that the test lead (134, 136) is inserted into the third port (142) of the first set of ports in response to the change in the voltage received from the switch disposed in the third port (142) of the first set of ports.

8. The pinout box system (100) as claimed in claim 1, comprising:

a fourth terminal (124) to connect the first terminal (116) of the first set of terminals (122) with the ECU (102), wherein the fourth terminal (124) is a part of the second set of terminals (128); a control switch (402) connecting the first terminal (116) of the first set of terminals (122) and the fourth terminal (124) of the second set of terminals (128), wherein the controller (152) is configured to:

monitor an electrical signal received at the first terminal (116) of the first set of terminals (128) from the first component of the plurality of components; determine that the electrical signal is unlikely to damage the ECU (102); and in response to the determination, turn on the control switch (402) to allow flow of the electrical signal to the ECU (102).

9. The pinout box system (100) as claimed in claim 4, wherein
the pinout box system (100) comprises an Auto-Ranging, AR, circuit (166), wherein the AR circuit (166) comprising:
a first resistor (504-1) and a second resistor (504-2) having mutually different resistance values and connected to the first component of the plurality of components, wherein, in response to insertion of a first test lead (134) of the test lead (134, 136) into the first port (138) of the first set of ports and a second test lead (136) of the test lead (134, 136) into the second port (140) of the first set of ports for measurement of resistance of the first component of the plurality of components, the controller (152) is to:

cause supply of the electrical signal to the first component of the plurality of components through the first resistor (504-1);

measure a first voltage across the first test lead (134) and the second test lead (136) of the test lead (134, 136), the first voltage across the first test lead (134) and the second test lead (136) of the test lead (134, 136) is indicative of the resistance of the first component of the plurality of components;

supply the electrical signal to the first component of the plurality of components through the second resistor (504-2);

measure a second voltage across the first test lead (134) and the second test lead (136) of the test lead (134, 136) in response to the electrical signal is supplied through the second resistor (504-2);

determine, based on the first voltage and the second voltage, that a first resistance of the first resistor (504-1) is closer to the resistance of the first component of the plurality of components as compared to a second resistance of the second resistor (504-2); and

determine the resistance of the first component of the plurality of components based on the first voltage.

10. The pinout box system (100) as claimed in claim 9, wherein, in response to the insertion of the first test lead (134) of the test probe (132) into the first port (138) of the first set of ports and the second test lead (136) of the test probe (132) into the second port (140) of the first set of ports for measurement of voltage output by the first component of the plurality of the components, the controller (152) is to measure a voltage across the first test lead (134) and the second test lead (136) of the test lead (134, 136).

11. The pinout box system (100) as claimed in claim 1, comprising:
a memory (154) coupled to the controller (152), the memory (154) is storing component configuration corresponding to a plurality of vehicles, the plurality of vehicles comprising the first vehicle, wherein the component configuration corresponding to the first vehicle indicates:

components of the plurality of components, of the first vehicle of the plurality of vehicle that are to be connected to the ECU (102) of the first vehicle; and

the terminal of the first set of terminals (122) to which a first component, of the plurality of components, of the first vehicle is connected in response to a connection of the first components of the plurality of components of the first vehicle of the plurality of vehicles with the pinout box system (100); and

an input device through which a selection of the first vehicle of the plurality of vehicles is to be received in response to the connection of the components of the plurality of components, of the first vehicle of the plurality of vehicle and the ECU (102) of the first vehicle of the plurality of vehicles to the pinout box system (100), wherein the controller (152) is configured to:

determine that the components of the plurality of components and the ECU (102) of the first vehicle of the plurality of vehicles are connected to the pinout box system (100) based on the selection received by the input device; and

determine that the first component of the plurality of components is connected to the first terminal (116) of the first set of terminals (122) based on the first component of the plurality of components configuration corresponding to the first vehicle of the plurality of vehicles.

12. The pinout box system (100) as claimed in claim 11, the memory (154) storing a lookup table corresponding to the plurality of vehicles, the plurality of vehicles comprising the first vehicle, wherein the lookup table corresponding to the first vehicle of the plurality of vehicles indicates:
light emitter of the first set of light emitters corresponding to first component of the plurality of components, of the vehicle of the plurality of vehicles, wherein the light emitter of the first set of light emitters corresponding to a port of the first set of ports that corresponds to the terminal of the first set of terminals (122) connected to the first component of the plurality of components, wherein, in response to receiving the selection of the first component of the plurality of components, the controller (152) is configured to:
determine, based on the lookup table corresponding to the first vehicle of the plurality of vehicles, that the port of the first set of ports corresponding to the first component of the plurality of components is the first port (138).

13. A method to test a plurality of components of a plurality of vehicles using a pin out box system (100), the pin out box system (100) comprising a controller (152), a first set of terminals (122) to be connected to a plurality of components of the first vehicle of the plurality of vehicles through a wiring harness (104) and to an Electronic Control Unit, ECU, (102) of the first vehicle of the plurality of vehicles, wherein the plurality of components is to be connected to the ECU (102), a first set of ports, wherein each port of the first set of ports corresponds to a terminal of the first set of terminals (122) and wherein a test lead (134, 136) of a test probe (132) is insertable into a port of the first set of ports to connect to a corresponding terminal of the first set of terminals (122), and a first set of light emitters, wherein each light emitter of the first set of light emitters corresponds to a port of the first set of ports, wherein the method comprising the steps of:

    receiving, by the controller (152) of the pinout box system (100), a selection of a first component of the plurality of components of a first vehicle of the plurality of vehicles;
    determining, by the controller (152), a first light emitter (148) of the first set of light emitters corresponding to a first port (138) of the first set of ports corresponding to a first terminal (116) of the first set of terminals (122) that is connected to the first component of the plurality of components; and
    causing, by the controller (152), illumination of the first light emitter (148) of the first set of light emitters, to facilitate identification of the first port (138) of the first set of ports into which the test lead (134, 136) is to be inserted for testing the first component of the plurality of components.

14. The method as claimed in claim 13, wherein the first component of the plurality of components is to be connected to a second terminal (118) of the first set of terminals (122) and to the first terminal (116) of the first set of terminals (122), wherein a second port (140) of the first set of ports corresponds to the second terminal (118) of the first set of terminals (122), and wherein the method comprises:

    causing, illumination of the first light emitter (148) of the first set of light emitters in a first colour;
    determining, a second light emitter (150) of the first set of light emitters corresponding to the second port (140) of the first set of ports; and
    causing, illumination of the second light emitter (150) of the first set of light emitters in a second colour.

15. The method as claimed in claim 13, wherein in response to insertion of the test lead (134, 136) into a third port (142) of the first set of ports, for testing the first component of the plurality of components, the method comprises at least one of:

    controlling, illumination of a third light emitter (206) corresponding to the third port (142) of the first set of ports in a third colour; and
    controlling, emission of light in a pattern by the third light emitter (206), to indicate that the test lead (134, 136) is inserted into an incorrect port.

16. The method as claimed in claim 13, wherein the pinout box system (100) comprises:

    a fourth terminal (124) of a second set of terminals (128), to connect to the first terminal (116) of the first set of terminals (122) with the ECU (102); and
    a control switch (402), connecting the first terminal (116) of the first set of terminals (122) and the fourth terminal (124) of the second set of terminals (128), wherein the method comprises:

        monitoring, an electrical signal received at the first terminal (116) of the first set of terminals (122) from the first component of the plurality of components connected to the first terminal (116) of the first set of terminals (122);
        determining, that the electrical signal is unlikely to damage the ECU (102); and
        turning, on the control switch (402) to allow flow of the electrical signal to the ECU (102) in response to the determination.

17. The method as claimed in claim 13, comprising:

    varying, a resistor through which the electrical signal is supplied to the first component of the plurality of components for measuring the resistance of the first component of the plurality of components;
    identifying, a first resistor having a resistance closest to the resistance of the first component of the plurality of components; and
    determining, a resistance of the first component of the plurality of components based on a voltage measured across the first component of the plurality of components when the electrical signal is supplied through the first resistor (504-1).

**Patentansprüche**

1. Pinbelegungsbox-System (100), umfassend:

    einen ersten Satz von Anschlüssen (122), die über einen Kabelbaum (104) mit einer Vielzahl von Komponenten eines ersten Fahrzeugs und mit einer elektronischen Steuereinheit (ECU) (102) des ersten Fahrzeugs verbunden werden sollen, wobei die Vielzahl von Komponenten mit der ECU (102) verbunden werden soll;

einen ersten Satz von Anschlüssen, wobei jeder Anschluss des ersten Satzes von Anschlüssen einem Anschluss des ersten Satzes von Anschlüssen (122) entspricht und wobei eine Messleitung (134, 136) einer Messsonde (132) in einen Anschluss des ersten Satzes von Anschlüssen einsteckbar ist, um eine Verbindung zu einem entsprechenden Anschluss des ersten Satzes von Anschlüssen (122) herzustellen;

einen ersten Satz von Lichtemittern, wobei jeder Lichtemitter des ersten Satzes von Lichtemittern einem Anschluss des ersten Satzes von Anschlüssen entspricht; und

eine Steuerung (152);

wobei die Steuerung (152) so konfiguriert ist, dass sie:

eine Auswahl einer ersten Komponente aus der Vielzahl von Komponenten empfängt, die getestet werden soll;

einen ersten Lichtemitter (148) des ersten Satzes von Lichtemittern zu bestimmen, der einem ersten Anschluss (138) des ersten Satzes von Anschlüssen entspricht, der einem ersten Anschluss (116) des ersten Satzes von Anschlüssen (122) entspricht, der mit der ersten Komponente der Vielzahl von Komponenten verbunden ist; und

die Beleuchtung des ersten Lichtemitters (148) des ersten Satzes von Lichtemittern zu veranlassen, um die Identifizierung des ersten Anschlusses (138) des ersten Satzes von Anschlüssen zu erleichtern, in den die Prüfleitung (134, 136) zum Prüfen der ersten Komponente der Vielzahl von Komponenten einzuführen ist.

2. Pinbelegungsbox-System (100) nach Anspruch 1, umfassend:

einen zweiten Satz von Anschlüssen (128) zum Verbinden des ersten Satzes von Anschlüssen (122) mit der ECU (102), wobei jeder Anschluss des zweiten Satzes von Anschlüssen (128) mit einem Anschluss des ersten Satzes von Anschlüssen (122) verbunden ist,

einen zweiten Satz von Anschlüssen, wobei jeder Anschluss des zweiten Satzes von Anschlüssen einem Anschluss des zweiten Satzes von Anschlüssen (128) entspricht und wobei die Messleitung (134, 136) der Messsonde (132) in jeden Anschluss des zweiten Satzes von Anschlüssen einsteckbar ist, um eine Verbindung mit dem entsprechenden Anschluss des zweiten Satzes von Anschlüssen (128) herzustellen; und

einen zweiten Satz von Lichtemittern, wobei jeder Lichtemitter des zweiten Satzes von Lichtemittern einem Anschluss des zweiten Satzes von Anschlüssen entspricht, wobei die Steuerung (152) folgende Aufgaben hat:

eine Auswahl einer Verbindung zwischen der ECU (102) und der ersten Komponente der Vielzahl von Komponenten als zu testende Verbindung zu empfangen;

die Klemme des zweiten Satzes von Klemmen (128) zu bestimmen, über die die ECU (102) mit der empfangenen ersten Komponente der Vielzahl von Komponenten verbunden ist;

einen Lichtemitter des zweiten Satzes von Lichtemittern zu bestimmen, der einem Anschluss des zweiten Satzes von Anschlüssen entspricht, der der bestimmten Klemme des zweiten Satzes von Klemmen (128) entspricht; und

das Leuchten des ermittelten Lichtemitters des zweiten Satzes von Lichtemittern bewirken.

3. Pinbelegungsbox-System (100) nach Anspruch 1, umfassend:

einen ersten Steckverbinder (112), der mit dem ersten Satz von Anschlüssen (122) verbunden ist, um den ersten Satz von Anschlüssen (122) mit dem Kabelbaum (104) zu verbinden; und einen zweiten Steckverbinder (114), der mit dem zweiten Satz von Anschlüssen (128) verbunden ist, um den zweiten Satz von Anschlüssen (128) mit der ECU (102) zu verbinden.

4. Pinbelegungsbox-System (100) nach Anspruch 1, wobei die erste Komponente des ersten Satzes von Komponenten mit einem zweiten Anschluss (118) des ersten Satzes von Anschlüssen (122) und mit dem ersten Anschluss (116) des ersten Satzes von Anschlüssen (122) verbunden werden soll, wobei ein zweiter Port des ersten Satzes von Ports dem zweiten Anschluss (118) des ersten Satzes von Anschlüssen (122) entspricht, und wobei die Steuerung dazu dient:

die Beleuchtung des ersten Lichtemitters (148) in einer ersten Farbe zu bewirken; einen zweiten Lichtemitter (150) zu bestimmen, der dem zweiten Anschluss (140) des ersten Satzes von Anschlüssen entspricht; und

die Beleuchtung des zweiten Lichtemitters (150) in einer zweiten Farbe zu bewirken.

5. Pinbelegungsbox-System (100) nach Anspruch 4, wobei der erste Lichtemitter (148) umfasst:
eine Vielzahl von Leuchtdioden (LEDs), wobei jede der Vielzahl von LEDs Licht in einer jeweils unterschiedlichen Farbe emittiert, wobei eine LED aus der Vielzahl von LEDs, die ein Logik-1-Signal empfängt, eine vom ersten Lichtemitter (148) emittierte Farbe bestimmt, wobei das Pinout-Box-System (100) umfasst:
einen Satz von Logikgattern, die die Steuerung (152) mit der Vielzahl von LEDs verbinden, und wobei, um den ersten Lichtemitter (148) dazu zu veranlassen, Licht der ersten Farbe zu emittieren, die Steuerung (152) so konfiguriert ist, dass sie:
Steuersignale an den Satz von Logikgattern zu liefern, die mit der Vielzahl von LEDs verbunden sind, wobei die LED aus der Vielzahl von LEDs, die in der Lage ist, Licht in der ersten Farbe zu emittieren, das Logik-1-Signal empfängt.

6. Pinbelegungsbox-System (100) nach Anspruch 1, wobei die Steuerung (152) so konfiguriert ist, dass sie als Reaktion auf das Einstecken der Testleitung (134, 136) in einen dritten Anschluss (142) des ersten Satzes von Anschlüssen zum Testen der ersten Komponente der Vielzahl von Komponenten mindestens eines der folgenden Ereignisse bewirkt:

das Leuchten eines dritten Lichtemitters (206), der dem dritten Anschluss (142) des ersten Anschlusssatzes entspricht, in einer dritten Farbe; und
das Aussenden eines Lichtmusters durch den dritten Lichtemitter (206), um anzuzeigen, dass die Testleitung (134, 136) in einen falschen Anschluss eingeführt wurde.

7. Pinbelegungsbox-System (100) nach Anspruch 6, umfassend:

einen Schalter, der in dem dritten Anschluss (142) des ersten Anschlusssatzes angeordnet ist, wobei der Schalter als Reaktion auf das Einführen der Messleitung (134, 136) in den dritten Anschluss (142) des ersten Anschlusssatzes betätigt wird, und wobei die Betätigung des Schalters eine Änderung einer Spannung bewirkt, die die Steuerung (152) vom Schalter empfängt, und
wobei die Steuerung (152) so konfiguriert ist, dass sie:
aufgrund der Änderung der vom Schalter, der im dritten Anschluss (142) des ersten Anschlusssatzes angeordnet ist, empfangenen Spannung feststellt, dass die Testleitung (134, 136) in den dritten Anschluss (142) des ersten Anschlusssatzes eingeführt ist.

8. Pinbelegungsbox-System (100) nach Anspruch 1, umfassend:

einen vierten Anschluss (124) zum Verbinden des ersten Anschlusses (116) des ersten Anschlusssatzes (122) mit der ECU (102), wobei der vierte Anschluss (124) Teil des zweiten Anschlusssatzes (128) ist;
einen Steuerschalter (402), der den ersten Anschluss (116) des ersten Anschlusssatzes (122) und den vierten Anschluss (124) des zweiten Anschlusssatzes (128) verbindet, wobei die Steuerung (152) so konfiguriert ist, dass sie:

ein elektrisches Signal zu überwachen, das am ersten Anschluss (116) des ersten Anschlusssatzes (128) von der ersten Komponente der mehreren Komponenten empfangen wird;
festzustellen, dass es unwahrscheinlich ist, dass das elektrische Signal die ECU (102) beschädigt; und
als Reaktion auf die Feststellung den Steuerschalter (402) einzuschalten, um den Fluss des elektrischen Signals zur ECU (102) zu ermöglichen.

9. Pinbelegungsbox-System (100) nach Anspruch 4, wobei
das Pinout-Box-System (100) eine Auto-Ranging-Schaltung (AR-Schaltung) (166) umfasst, wobei die AR-Schaltung (166) Folgendes umfasst:
einen ersten Widerstand (504-1) und einen zweiten Widerstand (504-2) mit voneinander unterschiedlichen Widerstandswerten, die mit der ersten Komponente der mehreren Komponenten verbunden sind, wobei als Reaktion auf das Einstecken einer ersten Messleitung (134) der Messleitungen (134, 136) in den ersten Anschluss (138) des ersten Anschlusssatzes und einer zweiten Messleitung (136) der Messleitung (134, 136) in den zweiten Anschluss (140) des ersten Anschlusssatzes zum Messen des Widerstands der ersten Komponente der mehreren Komponenten als Reaktion darauf die Steuerung (152) dazu veranlasst:

die Zufuhr des elektrischen Signals zur ersten Komponente der mehreren Komponenten durch den ersten Widerstand (504-1) zu bewirken;
eine erste Spannung zwischen der ersten Messleitung (134) und der zweiten Messleitung (136) der Messleitung (134, 136) zu messen, wobei die erste Spannung über der ersten Messleitung (134) und der zweiten Messleitung (136) der Messleitung (134, 136) den Widerstand der ersten Komponente der mehreren Komponenten angibt;

das elektrische Signal über den zweiten Widerstand (504-2) an die erste Komponente der mehreren Komponenten anzulegen;

Messen einer zweiten Spannung über der ersten Messleitung (134) und der zweiten Messleitung (136) der Messleitung (134, 136) als Reaktion darauf, dass das elektrische Signal über den zweiten Widerstand (504-2) zugeführt wird;

auf der Grundlage der ersten Spannung und der zweiten Spannung feststellen, dass ein erster Widerstand des ersten Widerstands (504-1) näher am Widerstand der ersten Komponente der mehreren Komponenten liegt als ein zweiter Widerstand des zweiten Widerstands (504-2); und

den Widerstand der ersten Komponente der mehreren Komponenten auf der Grundlage der ersten Spannung bestimmen.

10. Pinbelegungsbox-System (100) nach Anspruch 9, wobei als Reaktion auf das Einführen der ersten Testleitung (134) der Testspitze (132) in den ersten Anschluss (138) des ersten Anschlusssatzes und der zweiten Testleitung (136) der Testspitze (132) in den zweiten Anschluss (140) des ersten Anschlusssatzes zur Messung der von der ersten Komponente der Vielzahl von Komponenten ausgegebenen Spannung als Reaktion darauf, dass die erste Testleitung (134) der Testsonde (132) in den ersten Anschluss (138) des ersten Anschlusssatzes und die zweite Testleitung (136) der Testsonde (132) in den zweiten Anschluss (140) des ersten Anschlusssatzes eingeführt wird, die Steuerung (152) eine Spannung über der ersten Testleitung (134) und der zweiten Testleitung (136) der Testleitung (134, 136) misst.

11. Pinbelegungsbox-System (100) nach Anspruch 1, umfassend:

einen mit der Steuerung (152) verbundenen Speicher (154), wobei der Speicher (154) eine Komponentenkonfiguration speichert, die einer Vielzahl von Fahrzeugen entspricht, wobei die Vielzahl von Fahrzeugen das erste Fahrzeug umfasst, wobei die dem ersten Fahrzeug entsprechende Komponentenkonfiguration Folgendes angibt:

Komponenten aus der Vielzahl von Komponenten des ersten Fahrzeugs der Vielzahl von Fahrzeugen, die mit der ECU (102) des ersten Fahrzeugs verbunden werden sollen; und
den Anschluss des ersten Satzes von Anschlüssen (122), an den eine erste Komponente der Vielzahl von Komponenten des ersten Fahrzeugs als Reaktion auf eine Verbindung der ersten Komponenten der Vielzahl von Komponenten des ersten Fahrzeugs der Vielzahl von Fahrzeugen mit dem Pinout-Box-System (100) angeschlossen wird; und

eine Eingabevorrichtung, über die eine Auswahl des ersten Fahrzeugs aus der Vielzahl von Fahrzeugen als Reaktion auf die Verbindung der Komponenten aus der Vielzahl von Komponenten des ersten Fahrzeugs aus der Vielzahl von Fahrzeugen und der ECU (102) des ersten Fahrzeugs aus der Vielzahl von Fahrzeugen mit dem Pinout-Box-System (100) empfangen werden soll, wobei die Steuerung (152) so konfiguriert ist, dass sie:

festzustellen, dass die Komponenten der Vielzahl von Komponenten und die ECU (102) des ersten Fahrzeugs der Vielzahl von Fahrzeugen mit dem Pinout-Box-System (100) verbunden sind, basierend auf der durch die Eingabevorrichtung empfangenen Auswahl; und

feststellen, dass die erste Komponente der mehreren Komponenten mit dem ersten Anschluss (116) des ersten Anschlusssatzes (122) verbunden ist, basierend auf der Konfiguration der ersten Komponente der mehreren Komponenten, die dem ersten Fahrzeug der mehreren Fahrzeuge entspricht.

12. Pinbelegungsbox-System (100) nach Anspruch 11, wobei der Speicher (154) eine dem mehreren Fahrzeugen entsprechende Nachschlagetabelle speichert, wobei das mehrere Fahrzeuge das erste Fahrzeug umfasst, wobei die dem ersten Fahrzeug des mehreren Fahrzeugen entsprechende Nachschlagetabelle angibt:

Lichtemitter des ersten Satzes von Lichtemittern, der der ersten Komponente der Vielzahl von Komponenten des Fahrzeugs aus der Vielzahl von Fahrzeugen entspricht, wobei der Lichtemitter des ersten Satzes von Lichtemittern einem Anschluss des ersten Satzes von Anschlüssen entspricht, der dem Anschluss des ersten Satzes von Anschlüssen (122), der mit der ersten Komponente der Vielzahl von Komponenten verbunden ist, wobei die Steuerung (152) als Reaktion auf den Empfang der Auswahl der ersten Komponente der Vielzahl von Komponenten so konfiguriert ist, dass sie:

auf der Grundlage der dem ersten Fahrzeug der Vielzahl von Fahrzeugen entsprechenden Nachschlagetabelle bestimmt, dass der Anschluss des ersten Satzes von Anschlüssen, der der ersten Komponente der Vielzahl von Komponenten entspricht, der erste Anschluss (138) ist.

13. Verfahren zum Testen einer Vielzahl von Komponenten einer Vielzahl von Fahrzeugen unter Verwendung eines Pin-Out-Box-Systems (100), wobei das Pin-Out-Box-System (100) eine Steuerung (152), einen ersten Satz von Anschlüssen (122), die über einen Kabelbaum (104) mit einer Vielzahl von Komponenten des ersten Fahrzeugs der Vielzahl von Fahrzeugen und mit einer elektronischen Steuereinheit (ECU) (102) des ersten Fahrzeugs der mehreren Fahrzeuge, wobei die mehreren Komponenten mit der ECU (102) zu verbinden sind, einen ersten Satz von Anschlüssen, wobei jeder Anschluss des ersten Satzes von Anschlüssen einem Anschluss des ersten Satzes von Anschlüssen (122) entspricht und wobei eine Prüfleitung (134, 136) einer Prüfspitze (132) in einen Anschluss des ersten Satzes von Anschlüssen einsteckbar ist, um eine Verbindung zu einem entsprechenden Anschluss des ersten Satzes von Anschlüssen (122) herzustellen, und einen ersten Satz von Lichtemittern, wobei jeder Lichtemitter des ersten Satzes von Lichtemittern einem Anschluss des ersten Satzes von Anschlüssen entspricht, wobei das Verfahren die folgenden Schritte umfasst:

Empfangen einer Auswahl einer ersten Komponente aus der Vielzahl von Komponenten eines ersten Fahrzeugs aus der Vielzahl von Fahrzeugen durch die Steuerung (152) des Pinout-Box-Systems (100);
Bestimmen eines ersten Lichtemitters (148) des ersten Satzes von Lichtemittern durch die Steuerung (152), der einem ersten Anschluss (138) des ersten Satzes von Anschlüssen entspricht, der wiederum einem ersten Anschluss (116) des ersten Satzes von Anschlüssen (122) entspricht, der mit der ersten Komponente der Vielzahl von Komponenten verbunden ist; und
Veranlassen, durch die Steuereinheit (152), einer Beleuchtung des ersten Lichtemitters (148) des ersten Satzes von Lichtemittern, um die Identifizierung des ersten Anschlusses (138) des ersten Satzes von Anschlüssen zu erleichtern, in den die Messleitung (134, 136) zum Testen der ersten Komponente der Vielzahl von Komponenten einzuführen ist.

14. Verfahren nach Anspruch 13, wobei die erste Komponente der Vielzahl von Komponenten mit einem zweiten Anschluss (118) des ersten Satzes von Anschlüssen (122) und mit dem ersten Anschluss (116) des ersten Satzes von Anschlüssen (122) verbunden werden soll, wobei ein zweiter Anschluss (140) des ersten Satzes von Anschlüssen dem zweiten Anschluss (118) des ersten Satzes von Anschlüssen (122) entspricht, und wobei das Verfahren umfasst:

Veranlassen, dass der erste Lichtemitter (148) des ersten Satzes von Lichtemittern in einer ersten Farbe leuchtet;
Ermitteln eines zweiten Lichtemitters (150) des ersten Satzes von Lichtemittern, der dem zweiten Anschluss (140) des ersten Satzes von Anschlüssen entspricht; und
Veranlassen, dass der zweite Lichtemitter (150) des ersten Satzes von Lichtemittern in einer zweiten Farbe leuchtet.

15. Verfahren nach Anspruch 13, wobei das Verfahren als Reaktion auf das Einführen der Prüfleitung (134, 136) in einen dritten Anschluss (142) des ersten Anschlusssatzes zum Prüfen der ersten Komponente aus der Vielzahl von Komponenten mindestens einen der folgenden Schritte umfasst:

Steuern der Beleuchtung eines dritten Lichtemitters (206), der dem dritten Anschluss (142) des ersten Anschlusssatzes entspricht, in einer dritten Farbe; und
Steuern der Emission von Licht in einem Muster durch den dritten Lichtemitter (206), um anzuzeigen, dass die Testleitung (134, 136) in einen falschen Anschluss eingeführt wurde.

16. Verfahren nach Anspruch 13, wobei das Pinbelegungsbox-System (100) umfasst:

einen vierten Anschluss (124) eines zweiten Satzes von Anschlüssen (128) zur Verbindung des ersten Anschlusses (116) des ersten Satzes von Anschlüssen (122) mit der ECU (102); und
einen Steuerschalter (402), der den ersten Anschluss (116) des ersten Anschlusssatzes (122) und den vierten Anschluss (124) des zweiten Anschlusssatzes (128) verbindet, wobei das Verfahren umfasst:

Überwachen eines elektrischen Signals, das am ersten Anschluss (116) des ersten Anschlusssatzes (122) von der ersten Komponente der Vielzahl von Komponenten empfangen wird, die mit dem ersten Anschluss (116) des ersten Anschlusssatzes (122) verbunden sind;
Feststellen, dass das elektrische Signal die ECU (102) wahrscheinlich nicht beschädigt; und
Einschalten des Steuerschalters (402), um den Fluss des elektrischen Signals zur ECU (102) als Reaktion auf die Feststellung zu ermöglichen.

17. Verfahren nach Anspruch 13, umfassend:

das Variieren eines Widerstands, über den das elektrische Signal an die erste Komponente der mehreren Komponenten angelegt wird, um den Widerstand der ersten Komponente der mehreren Komponenten zu messen;

Identifizieren eines ersten Widerstands, dessen Widerstand dem Widerstand der ersten Komponente der Vielzahl von Komponenten am nächsten kommt; und

Bestimmen eines Widerstands der ersten Komponente der Vielzahl von Komponenten auf der Grundlage einer Spannung, die an der ersten Komponente der Vielzahl von Komponenten gemessen wird, wenn das elektrische Signal durch den ersten Widerstand zugeführt wird (504-1).

## Revendications

1.   Système de boîtier de brochage (100) comprenant :

un premier ensemble de bornes (122) destiné à être connecté à une pluralité de composants d'un premier véhicule par l'intermédiaire d'un faisceau de câbles (104) et à une unité de commande électronique (ECU) (102) dudit premier véhicule, la pluralité de composants devant être connectée à l'ECU (102) ;

un premier ensemble de ports, dans lequel chaque port du premier ensemble de ports correspond à une borne du premier ensemble de bornes (122) et dans lequel un fil de test (134, 136) d'une sonde de test (132) peut être inséré dans un port du premier ensemble de ports pour se connecter à une borne correspondante du premier ensemble de bornes (122) ;

un premier ensemble d'émetteurs de lumière, dans lequel chaque émetteur de lumière du premier ensemble d'émetteurs de lumière correspond à un port du premier ensemble de ports ; et

un contrôleur (152) ;

dans lequel le contrôleur (152) est configuré pour :

recevoir une sélection d'un premier composant de la pluralité de composants qui doit être testé ;

déterminer un premier émetteur de lumière (148) du premier ensemble d'émetteurs de lumière correspondant à un premier port (138) du premier ensemble de ports correspondant à une première borne (116) du premier ensemble de bornes (122) qui est connectée au premier composant de la pluralité de composants ; et

provoquer l'allumage du premier émetteur de lumière (148) du premier ensemble d'émetteurs de lumière, afin de faciliter l'identification du premier port (138) du premier ensemble de ports dans lequel le cordon de test (134, 136) doit être inséré pour tester le premier composant de la pluralité de composants.

2.   Système de boîtier de brochage (100) selon la revendication 1, comprenant :

un deuxième ensemble de bornes (128) destiné à relier le premier ensemble de bornes (122) à l'ECU (102), dans lequel chaque borne du deuxième ensemble de bornes (128) est reliée à une borne du premier ensemble de bornes (122),

un deuxième ensemble de ports, dans lequel chaque port du deuxième ensemble de ports correspond à une borne du deuxième ensemble de bornes (128) et dans lequel le fil de test (134, 136) de la sonde de test (132) peut être inséré dans chaque port du deuxième ensemble de ports pour se connecter à la borne correspondante du deuxième ensemble de bornes (128) ; et

un deuxième ensemble d'émetteurs de lumière, dans lequel chaque émetteur de lumière du deuxième ensemble d'émetteurs de lumière correspond à un port du deuxième ensemble de ports, dans lequel le contrôleur (152) doit :

recevoir une sélection d'une connexion entre l'ECU (102) et le premier composant de la pluralité de composants en tant que connexion à tester ;

déterminer la borne du deuxième ensemble de bornes (128) par l'intermédiaire de laquelle l'ECU (102) est connecté au premier composant reçu de la pluralité de composants ;

déterminer un émetteur de lumière du deuxième ensemble d'émetteurs de lumière correspondant à un port du deuxième ensemble de ports qui correspond à la borne déterminée du deuxième ensemble de bornes (128) ; et

provoquer l'allumage de l'émetteur de lumière déterminé du deuxième ensemble d'émetteurs de lumière.

3.   Système de boîtier de brochage (100) selon la revendication 1, comprenant :

un premier connecteur (112) relié au premier ensemble de bornes (122), destiné à relier le premier ensemble de bornes (122) au faisceau de câbles (104) ; et

un deuxième connecteur (114) relié au deuxième ensemble de bornes (128), pour relier le deuxième ensemble de bornes (128) à l'ECU (102).

4. Système de boîtier de brochage (100) selon la revendication 1, dans lequel le premier composant du premier ensemble de composants doit être connecté à une deuxième borne (118) du premier ensemble de bornes (122) et à la première borne (116) du premier ensemble de bornes (122), dans lequel un deuxième port du premier ensemble de ports correspond à la deuxième borne (118) du premier ensemble de bornes (122), et dans lequel le contrôleur doit :

   provoquer l'allumage du premier émetteur de lumière (148) dans une première couleur ;
   déterminer un deuxième émetteur de lumière (150) correspondant au deuxième port (140) du premier ensemble de ports ; et
   provoquer l'allumage du deuxième émetteur de lumière (150) dans une deuxième couleur.

5. Système de boîtier à broches (100) selon la revendication 4, dans lequel le premier émetteur de lumière (148) comprend :
   une pluralité de diodes électroluminescentes (LED), dans laquelle chacune des LED de la pluralité émet de la lumière dans des couleurs mutuellement différentes, dans laquelle une LED de la pluralité de LED qui reçoit un signal logique 1 détermine une couleur émise par le premier émetteur de lumière (148), dans lequel le système de boîtier de brochage (100) comprend :
   un ensemble de portes logiques reliant le contrôleur (152) à la pluralité de LED, et dans lequel, pour amener le premier émetteur de lumière (148) à émettre de la lumière de la première couleur, le contrôleur (152) est configuré pour :
   fournir des signaux de commande à l'ensemble de portes logiques connectées à la pluralité de LED, dans lequel la LED de la pluralité de LED qui est capable d'émettre de la lumière dans la première couleur reçoit le signal logique 1.

6. Système de boîtier de brochage (100) selon la revendication 1, dans lequel, en réponse à l'insertion du cordon de test (134, 136) dans un troisième port (142) du premier ensemble de ports pour tester le premier composant de la pluralité de composants, le contrôleur (152) est configuré pour provoquer au moins l'une des actions suivantes :

   l'allumage d'un troisième émetteur de lumière (206) correspondant au troisième port (142) du premier ensemble de ports dans une troisième couleur ; et
   l'émission d'un motif lumineux par le troisième émetteur de lumière (206), pour indiquer que le fil de test (134, 136) est inséré dans un port incorrect.

7. Système de boîtier de brochage (100) selon la revendication 6, comprenant :
   un commutateur disposé dans le troisième port (142) du premier ensemble de ports, dans lequel le commutateur est destiné à être actionné en réponse à l'insertion du fil de test (134, 136) dans le troisième port (142) du premier ensemble de ports, et dans lequel l'actionnement du commutateur provoque une variation de la tension reçue par le contrôleur (152) en provenance du commutateur, et dans lequel le contrôleur (152) est configuré pour :
   déterminer que le fil de test (134, 136) est inséré dans le troisième port (142) du premier ensemble de ports en réponse à la variation de la tension reçue du commutateur disposé dans le troisième port (142) du premier ensemble de ports.

8. Système de boîtier de brochage (100) selon la revendication 1, comprenant :

   une quatrième borne (124) destinée à relier la première borne (116) du premier ensemble de bornes (122) à l'ECU (102), la quatrième borne (124) faisant partie du deuxième ensemble de bornes (128) ;
   un commutateur de commande (402) reliant la première borne (116) du premier ensemble de bornes (122) et la quatrième borne (124) du deuxième ensemble de bornes (128), dans lequel le contrôleur (152) est configuré pour :

   surveiller un signal électrique reçu au niveau de la première borne (116) du premier ensemble de bornes (128) provenant du premier composant de la pluralité de composants ;
   déterminer que le signal électrique est peu susceptible d'endommager l'ECU (102) ; et
   en réponse à cette détermination, activer le commutateur de commande (402) pour permettre la circulation du signal électrique vers l'ECU (102).

9. Système de boîtier de brochage (100) selon la revendication 4, dans lequel
   le système de boîtier de brochage (100) comprend un circuit de sélection automatique de gamme (AR) (166), ledit circuit AR (166) comprenant :
   une première résistance (504-1) et une deuxième résistance (504-2) ayant des valeurs de résistance mutuellement différentes et connectées au premier composant de la pluralité de composants, dans lequel, en réponse à l'insertion d'un premier fil de test (134) parmi les fils de test (134, 136) dans le premier port (138) du premier ensemble de ports et d'un deuxième fil de test (136) de la sonde de test (134, 136) dans le deuxième port (140) du premier ensemble de ports pour mesurer la résistance du premier composant de la pluralité de composants, le contrôleur (152) doit :

provoquer la fourniture du signal électrique au premier composant de la pluralité de composants via la première résistance (504-1) ;

mesurer une première tension entre le premier fil de test (134) et le deuxième fil de test (136) du fil de test (134, 136), la première tension entre le premier fil de test (134) et le deuxième fil de test (136) des fils de test (134, 136) étant indicative de la résistance du premier composant parmi la pluralité de composants ;

fournir le signal électrique au premier composant parmi la pluralité de composants via la deuxième résistance (504-2) ;

mesurer une deuxième tension entre le premier fil de test (134) et le deuxième fil de test (136) du fil de test (134, 136) en réponse au signal électrique fourni via la deuxième résistance (504-2) ;

déterminer, sur la base de la première tension et de la deuxième tension, qu'une première résistance de la première résistance (504-1) est plus proche de la résistance du premier composant de la pluralité de composants que ne l'est une deuxième résistance de la deuxième résistance (504-2) ; et

déterminer la résistance du premier composant de la pluralité de composants sur la base de la première tension.

10. Système de boîtier de brochage (100) selon la revendication 9, dans lequel, en réponse à l'insertion du premier fil de test (134) de la sonde de test (132) dans le premier port (138) du premier ensemble de ports et du deuxième fil de test (136) de la sonde de test (132) dans le deuxième port (140) du premier ensemble de ports pour mesurer la tension de sortie du premier composant de la pluralité de composants, le contrôleur (152) doit mesurer une tension entre le premier fil de test (134) et le deuxième fil de test (136) de la sonde de test (132).

11. Système de boîtier de brochage (100) selon la revendication 1, comprenant :
une mémoire (154) couplée au contrôleur (152), la mémoire (154) stockant une configuration de composants correspondant à une pluralité de véhicules, ladite pluralité de véhicules comprenant le premier véhicule, dans lequel la configuration de composants correspondant au premier véhicule indique :

les composants, parmi la pluralité de composants du premier véhicule de la pluralité de véhicules, qui doivent être connectés à l'ECU (102) du premier véhicule ; et

la borne du premier ensemble de bornes (122) à laquelle un premier composant, parmi la pluralité de composants, du premier véhicule est connecté en réponse à une connexion des premiers composants de la pluralité de composants du premier véhicule de la pluralité de véhicules avec le système de boîtier de brochage (100) ; et

un dispositif d'entrée par l'intermédiaire duquel une sélection du premier véhicule parmi la pluralité de véhicules doit être reçue en réponse à la connexion des composants de la pluralité de composants du premier véhicule parmi la pluralité de véhicules et de l'ECU (102) du premier véhicule parmi la pluralité de véhicules au système de boîtier de brochage (100), dans lequel le contrôleur (152) est configuré pour :

déterminer que les composants de la pluralité de composants et l'ECU (102) du premier véhicule de la pluralité de véhicules sont connectés au système de boîtier de brochage (100) sur la base de la sélection reçue par le dispositif d'entrée ; et

déterminer que le premier composant de la pluralité de composants est connecté à la première borne (116) du premier ensemble de bornes (122) sur la base de la configuration du premier composant de la pluralité de composants correspondant au premier véhicule de la pluralité de véhicules.

12. Système de boîtier de brochage (100) selon la revendication 11, la mémoire (154) stockant une table de correspondance correspondant à la pluralité de véhicules, la pluralité de véhicules comprenant le premier véhicule, dans lequel la table de correspondance correspondant au premier véhicule de la pluralité de véhicules indique :
l'émetteur de lumière du premier ensemble d'émetteurs de lumière correspondant au premier composant de la pluralité de composants, du véhicule de la pluralité de véhicules, dans lequel l'émetteur de lumière du premier ensemble d'émetteurs de lumière correspond à un port du premier ensemble de ports qui correspond à la borne du premier ensemble de bornes (122) connecté au premier composant de la pluralité de composants, dans lequel, en réponse à la réception de la sélection du premier composant de la pluralité de composants, le contrôleur (152) est configuré pour :
déterminer, sur la base de la table de correspondance correspondant au premier véhicule de la pluralité de véhicules, que le port du premier ensemble de ports correspondant au premier composant de la pluralité de composants est le premier port (138).

13. Procédé pour tester une pluralité de composants d'une pluralité de véhicules à l'aide d'un système de boîtier de brochage (100), le système de boîtier de brochage (100) comprenant un contrôleur (152), un premier ensemble de bornes (122) destiné à être connecté à une pluralité de composants du premier véhicule de la pluralité de véhicules par l'intermédiaire d'un faisceau de câbles (104) et à une unité de contrôle électronique, ECU, (102) du premier véhicule de la pluralité de véhicules, dans lequel la pluralité de composants doit être connectée à l'ECU (102), un premier ensemble de ports, dans lequel chaque port du premier ensemble de ports correspond à une borne du premier ensemble de bornes (122) et dans lequel un fil de test (134, 136) d'une sonde de test (132) peut être insérée dans un port du premier ensemble de ports pour se connecter à une borne correspondante du premier ensemble de bornes (122), et un premier ensemble d'émetteurs de lumière, dans lequel chaque émetteur de lumière du premier ensemble d'émetteurs de lumière correspond à un port du premier ensemble de ports, le procédé comprenant les étapes suivantes :

la réception, par le contrôleur (152) du système de boîtier de brochage (100), d'une sélection d'un premier composant parmi la pluralité de composants d'un premier véhicule parmi la pluralité de véhicules ;

déterminer, par le contrôleur (152), un premier émetteur de lumière (148) du premier ensemble d'émetteurs de lumière correspondant à un premier port (138) du premier ensemble de ports correspondant à une première borne (116) du premier ensemble de bornes (122) qui est connectée au premier composant de la pluralité de composants ; et

en provoquant, par l'intermédiaire du contrôleur (152), l'allumage du premier émetteur de lumière (148) du premier ensemble d'émetteurs de lumière, afin de faciliter l'identification du premier port (138) du premier ensemble de ports dans lequel le cordon de test (134, 136) doit être inséré pour tester le premier composant de la pluralité de composants.

14. Procédé selon la revendication 13, dans lequel le premier composant de la pluralité de composants doit être connecté à une deuxième borne (118) du premier ensemble de bornes (122) et à la première borne (116) du premier ensemble de bornes (122), dans lequel un deuxième port (140) du premier ensemble de ports correspond à la deuxième borne (118) du premier ensemble de bornes (122), et dans lequel le procédé comprend :

le fait de provoquer l'illumination du premier émetteur de lumière (148) du premier ensemble d'émetteurs de lumière dans une première couleur ;

déterminer un deuxième émetteur de lumière (150) du premier ensemble d'émetteurs de lumière correspondant au deuxième port (140) du premier ensemble de ports ; et

provoquer l'illumination du deuxième émetteur de lumière (150) du premier ensemble d'émetteurs de lumière dans une deuxième couleur.

15. Procédé selon la revendication 13, dans lequel, en réponse à l'insertion du cordon de test (134, 136) dans un troisième port (142) du premier ensemble de ports, afin de tester le premier composant de la pluralité de composants, le procédé comprend au moins l'une des opérations suivantes :

commander l'allumage d'un troisième émetteur de lumière (206) correspondant au troisième port (142) du premier ensemble de ports dans une troisième couleur ; et

commander l'émission de lumière selon un motif par le troisième émetteur de lumière (206), pour indiquer que le fil de test (134, 136) est inséré dans un port incorrect.

16. Procédé selon la revendication 13, dans lequel le système de boîtier de brochage (100) comprend :

une quatrième borne (124) d'un deuxième ensemble de bornes (128), destinée à être connectée à la première borne (116) du premier ensemble de bornes (122) avec l'ECU (102) ; et

un commutateur de commande (402), reliant la première borne (116) du premier ensemble de bornes (122) et la quatrième borne (124) du deuxième ensemble de bornes (128), dans lequel le procédé comprend :

surveiller un signal électrique reçu au niveau de la première borne (116) du premier ensemble de bornes (122) provenant du premier composant de la pluralité de composants connectés à la première borne (116) du premier ensemble de bornes (122) ;

déterminer que le signal électrique est peu susceptible d'endommager l'ECU (102) ; et

activer le commutateur de commande (402) pour permettre la circulation du signal électrique vers l'ECU (102) en réponse à ladite détermination.

17. Procédé selon la revendication 13, comprenant :

la variation d'une résistance à travers laquelle le signal électrique est fourni au premier composant de la pluralité de composants afin de mesurer la résistance dudit premier composant ;

l'identification d'une première résistance ayant une valeur de résistance la plus proche de la résistance du premier composant de la pluralité de composants ; et

la détermination d'une résistance du premier composant de la pluralité de composants sur la base d'une tension mesurée aux bornes du premier composant de la pluralité de composants lorsque le signal électrique est fourni par l'intermédiaire de la première résistance (504-1).

Fig. 1

EP 4 128 173 B1

## Fig. 2

Fig. 3

Fig. 4

Fig. 5

600

RECEIVING SELECTION OF A FIRST COMPONENT TO BE
TESTED 602

DETERMINING A FIRST LIGHT EMITTER CORRESPONDING
TO A FIRST PORT CORRESPONDING A FIRST TERMINAL
CONNECTED TO THE FIRST COMPONENT 604

CAUSING ILLUMINATION OF THE FIRST LIGHT EMITTER
606

# Fig. 6

700

```
┌─────────────────────────────────────────────────┐
│  RECEIVING SELECTION OF A FIRST VEHICLE FROM A   │
│         PLURALITY OF VEHICLES 702                 │
└─────────────────────────────────────────────────┘
                      │
                      ▼
┌─────────────────────────────────────────────────┐
│  DETERMINING THAT A COMPONENT CONFIGURATION      │
│  CORRESPONDING TO THE FIRST VEHICLE IS TO BE     │
│              UTILIZED 704                          │
└─────────────────────────────────────────────────┘
                      │
                      ▼
┌─────────────────────────────────────────────────┐
│  LISTING COMPONENTS OF THE FIRST VEHICLE FOR     │
│              SELECTION 706                         │
└─────────────────────────────────────────────────┘
                      │
                      ▼
┌─────────────────────────────────────────────────┐
│   RECEIVING SELECTION OF A FIRST COMPONENT 708   │
└─────────────────────────────────────────────────┘
                      │
                      ▼
┌─────────────────────────────────────────────────┐
│  CAUSING ILLUMINATION OF A FIRST LIGHT EMITTER   │
│  CORRESPONDING TO THE FIRST COMPONENT 710        │
└─────────────────────────────────────────────────┘
                      │
                      ▼
┌─────────────────────────────────────────────────┐
│ PERFORMING CONTINUITY CHECK OF THE FIRST COMPONENT 712 │
└─────────────────────────────────────────────────┘
                      │
                      ▼
┌─────────────────────────────────────────────────┐
│   DISPLAYING RESULT OF THE CONTINUITY CHECK 714  │
└─────────────────────────────────────────────────┘
                      │
                      ▼
┌─────────────────────────────────────────────────┐
│  MEASURING RESISTANCE OF THE FIRST COMPONENT 716 │
└─────────────────────────────────────────────────┘
                      │
                      ▼
┌─────────────────────────────────────────────────┐
│ DISPLAYING RESISTANCE OF THE FIRST COMPONENT 718 │
└─────────────────────────────────────────────────┘
                      │
                      ▼
┌─────────────────────────────────────────────────┐
│  DISPLAYING IF A CONDITION OF THE FIRST COMPONENT│
│              IS FAULTY 720                         │
└─────────────────────────────────────────────────┘
```

# Fig. 7

800

```
┌─────────────────────────────────────────────────────────────────┐
│  RECEIVING SELECTION OF A FIRST VEHICLE FROM A PLURALITY OF VEHICLES 802 │
└─────────────────────────────────────────────────────────────────┘
                              │
                              ▼
┌─────────────────────────────────────────────────────────────────┐
│  DETERMINING THAT A COMPONENT CONFIGURATION CORRESPONDING TO THE FIRST │
│                  VEHICLE IS TO BE UTILIZED 804                     │
└─────────────────────────────────────────────────────────────────┘
                              │
                              ▼
┌─────────────────────────────────────────────────────────────────┐
│       MONITORING AN INPUT VOLTAGE AT A FIRST SET OF TERMINALS 806  │
└─────────────────────────────────────────────────────────────────┘
                              │
                              ▼
            ╱─────────────────────────────────────────╲
           ╱  IS AN INPUT VOLTAGE AT A TERMINAL OF A FIRST SET OF TERMINALS GREATER  ╲
          ╱           THAN A THRESHOLD VOLTAGE? 808                    ╲
           ╲                                                          ╱
            ╲─────────────────────────────────────────╱
```

No                                                        YES

┌─────────────────────────────────────────────────────────────────┐
│  MAINTAINING CONTROL SWITCH FOR A TERMINAL THAT RECEIVED THE INPUT │
│             VOLTAGE IN A TURNED OFF STATE 810                      │
└─────────────────────────────────────────────────────────────────┘

┌─────────────────────────────────────────────────────────────────┐
│  TURNING ON CONTROL SWITCH FOR TERMINALS THAT RECEIVED THE INPUT VOLTAGE │
│              LESS THAN THE THRESHOLD VOLTAGE 812                   │
└─────────────────────────────────────────────────────────────────┘
                              │
                              ▼
┌─────────────────────────────────────────────────────────────────┐
│       LISTING COMPONENTS OF THE FIRST VEHICLE FOR SELECTION 814    │
└─────────────────────────────────────────────────────────────────┘
                              │
                              ▼
┌─────────────────────────────────────────────────────────────────┐
│           RECEIVING SELECTION OF A FIRST COMPONENT 816            │
└─────────────────────────────────────────────────────────────────┘
                              │
                              ▼
┌─────────────────────────────────────────────────────────────────┐
│  CAUSING ILLUMINATION OF A FIRST LIGHT EMITTER CORRESPONDING TO THE FIRST │
│                    COMPONENT 818                                   │
└─────────────────────────────────────────────────────────────────┘
                              │
                              ▼
┌─────────────────────────────────────────────────────────────────┐
│          MEASURING VOLTAGE OF THE FIRST COMPONENT 820             │
└─────────────────────────────────────────────────────────────────┘
                              │
                              ▼
┌─────────────────────────────────────────────────────────────────┐
│          DISPLAYING VOLTAGE OF THE FIRST COMPONENT 822           │
└─────────────────────────────────────────────────────────────────┘
                              │
                              ▼
┌─────────────────────────────────────────────────────────────────┐
│     DISPLAYING IF A CONDITION OF THE FIRST COMPONENT IS FAULTY 824 │
└─────────────────────────────────────────────────────────────────┘

# Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- CAN Test Box User's Guide. *Pico Technologies*, 2017, 1-12